# EUROPEAN PATENT APPLICATION

(11) **EP 2 423 278 A1**
(43) Date of publication of application: **29.02.2012**
(21) Application number: 11175818.1
(22) Date of filing: 28.07.2011
(51) Int. Cl.: C09D 11/00, C09D 11/10

(54) **INK COMPOSITION, IMAGE FORMING METHOD AND PRINTED MATTER**

(30) Priority: 31.08.2010 JP 2010194409
(71) Applicant: Fujifilm Corporation, Minato-ku Tokyo (JP)
(72) Inventor: Shimohara, Norihide, Ashigarakami-gun, Kanagawa (JP)
(74) Representative: Mayall, John

(57) **Abstract**

The present invention provides an ink composition including pigments (a) at least two of maleimide compounds (b), and a polymerizable compound (c), at least one of the at least two maleimide compounds (b) being a polymer compound (b-1) containing at least one group selected from the group consisting of an amino group, a carboxyl group and a phosphoric acid group, which exhibits excellent ink ejection stability, even in a case in which the ink composition is stored over an extended period, and excellent curability with respect to an image film.

## Description

### BACKGROUND OF THE INVENTION

### [Field of the Invention]

The present invention relates to an ink composition, an image forming method, and a printed matter.

### [Description of the Related Art]

Inkjet recording systems perform recording through ejecting a liquid ink composition from a nozzle toward a recording medium, using pressure, heat, an electric field, or the like as a driving source. Since running costs are low and high image quality can be achieved, such inkjet recording systems have rapidly become widely used in recent years, not only for office use but also for private use.

Recently, various methods of using a dispersant or the like to obtain an ink composition having stable dischargeability have been proposed. For instance, WO2007/072805 discloses a nonaqueous inkjet ink composition including a vinyl polymer, a colorant, and an organic solvent, for the purpose of improving ejection stability. Japanese Patent Application Laid-Open (JP-A) No. 2003-277673 discloses a pigment dispersant having an imido group, in which an SP value of a segment thereof is regulated, as a dispersant for a pigment used in a colored coating composition.
Further, with regard to an ink composition for use other than in inkjet printing, for the purpose of coating in the open air, a coating composition including a polymer having a maleimido group, a pigment, a photopolymerization initiator, and an organic solvent has also been disclosed (JP-A No. 2002-241702).

### SUMMARY OF THE INVENTION

According to an aspect of the invention, an ink composition including pigments (a) at least two of maleimide compounds (b), and a polymerizable compound (c), at least one of the at least two maleimide compounds (b) being a polymer compound (b-1) containing at least one group selected from the group consisting of an amino group, a carboxyl group and a phosphoric acid group, which exhibits excellent ink ejection stability, even in a case in which the ink composition is stored over an extended period, and excellent curability with respect to an image film; a use of the same for inkj et recording; an image forming method using the same; and a printed matter obtained by the method, are provided.

### [Problems to be Addressed by the Invention]

In the case of using an ink composition for inkjet printing, curability of a recorded image (film) obtained from the ink composition is also required, in addition to the ejection stability of the ink composition. For example, in an actinic energy ray curable inkjet, which is to be cured by an actinic energy ray such as an ultraviolet ray, it is important that the ink composition is quickly cured with a small amount of exposure value or a small number of times of exposure.
However, the ink composition of W02007/072805 and an ink composition using only the pigment dispersant described in JP-A No. 2003-277673 have not yet reached a level sufficient in terms of improvement in the above curability, and there is room for further improvement.
Further, JP-A No. 2002-241702 does not disclose anything about ink ej ection stability, and further, regarding curability, the curability of the ink composition cannot satisfy the requirement of curing in a short time such for an inkj et or the like. Particularly, in recent years, progress has been made in the realization of a thin film of a recorded image (film) to be obtained and thus, improvement in curability is required in the formation of an image thin film.
The present invention aims to accomplish the following. Namely, the aspect of the present invention provides an ink composition which exhibits excellent ink ejection stability, even in a case in which the ink composition is stored over an extended period, and excellent curability with respect to an image film (especially, curability with respect to a thinner film).

### [Solution to Problem]

Exemplary embodiments according to the aspect of the invention include, but are not limited to the following items <1> to <15>.
<1> An ink composition including: pigments (a); at least two maleimide compounds (b); and a polymerizable compounds (c), at least a first one of the at least two maleimide compounds (b) being a polymer compound (b-1) containing at least one group selected from the group consisting of an amino group, a carboxyl group and a phosphoric acid group.

<2> The ink composition according to the item <1>, wherein a second maleimide compound of the at least two maleimide compounds (b), maleimide compound (b-2), is a compound that does not include any of an amino group, a carboxyl group or a hosphoric acid group.

<3> The ink composition according to the item <1> or the item <2>, wherein the polymer compound (b-1) including at least one group selected from the group consisting of an amino group, a carboxyl group and a phosphoric acid group includes a repeating unit represented by following Formula (1), 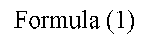 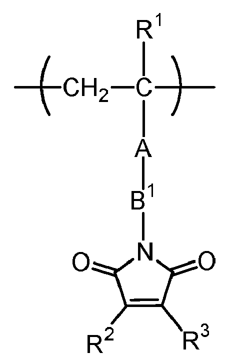 wherein, in Formula (1), R¹ represents a hydrogen atom or a methyl group; each of R² and R³ independently represents an alkyl group or an aryl group, and R² and R³ may bond to each other to form a ring; A represents a single bond, an arylene group, -COO- or -CONR⁴-; R⁴ represents a hydrogen atom or an alkyl group; and B¹ represents a single bond, an alkylene group, an arylene group or an aralkylene group, and the alkylene group, the arylene group or the aralkylene group may include one or more ether bonds (-O-) or one or more ester bonds (-COO- or -OCO-) in each group thereof.

<4> The ink composition according to any one of the items <1> to <3>, wherein the polymer compound (b-1) including at least one group selected from the group consisting of an amino group, a carboxyl group and a phosphoric acid group further includes a repeating unit represented by following Formula (2), 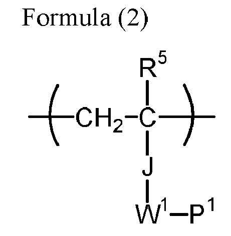 wherein, in Formula (2), R⁵ represents a hydrogen atom or a methyl group; J represents a single bond, -CO-, -COO-, -CONR⁶-, -OCO- or a phenylene group; R⁶ represents a hydrogen atom, an alkyl group, an aryl group or an aralkyl group; W¹ represents a single bond, an amido bond, an alkylene group or an aralkylene group, and the alkylene group or the aralkylene group may include an imino bond, an ester bond, an ether bond, a sulfonamido bond, a urethane bond, a ureylene bond, a carbonate bond or a heterocyclic group in each group thereof; and P¹ represents a condensed ring group in which 3 to 5 rings are condensed.

<5> The ink composition according to the item <4>, wherein P¹ in Formula (2) represents a condensed ring group derived from acridone, quinacridone, anthraquinone, naphthalimide, carbazole, acridine, dibenzofuran, 2,3-naphthalenedicarboximide, phenothiazine or fluorenone.

<6> The ink composition according to any one of the items <1> to <5>, wherein the polymer compound (b-1) including at least one group selected from the group consisting of an amino group, a carboxyl group and a phosphoric acid group is a graft copolymer having another repeating unit derived from a polymerizable oligomer having an ethylenically unsaturated double bond at a terminal of the oligomer.

<7> The ink composition according to any one of the items <1> to <6>, wherein a weight average molecular weight (Mw) of the polymer compound (b-1) including at least one group selected from the group consisting of an amino group, a carboxyl group and a phosphoric acid group, which is measured by using gel permeation chromatography with respect to polystyrene standards, is in a range of from 10,000 to 500,000.

<8> The ink composition according to any one of the items <2> to <7>, wherein a molecular weight of the compound that does not include any of an amino group, a carboxyl group or a hosphoric acid group is a low molecular weight compound having a molecular weight in a range of from 300 to 2,000.

<9> The ink composition according to any one of the items <2> to <8>, wherein the compound that does not include any of an amino group, a carboxyl group or a hosphoric acid group includes at least two maleimido groups.

<10> The ink composition according to any one of the items <1> to <9>, wherein the polymerizable compound (c) is a (meth)acrylate compound.

<11> The ink composition according to any one of the items <1> to <10>, further including a polymerization initiator.

<12> The ink composition according to any one of the items <1> to <11>, further including a polymerization inhibitor in a range of 1,000 ppm to 20,000 ppm with respect to a total mass of the ink composition.

<13> A use of the ink composition according to any one of the items <1> to <12> for an inkjet recording.

<14> An image forming method including forming an image with an inkjet printer using the ink composition according to any one of the items <1> to <12>.

<15> A printed matter formed by using the ink composition according to any one of the items <1> to <12>.

According to the present invention, an ink composition which exhibits excellent ink ejection stability and excellent curability (especially, curability when the ink composition is ejected so as to form a thin film) may be provided.

### DETAILED DESCRIPTION OF THE INVENTION

### [Ink Composition]

The ink composition of the present invention includes at least a pigment (a), at least two types of maleimide compounds (b), and a polymerizable compound (c), wherein at least a first one of the at least two types of maleimide compounds (b) is a polymer (b-1) having at least one group selected from the group consisting of an amino group, a carboxyl group, and a phosphoric acid group.

Hereinafter, each of components in an ink composition of the present invention is specifically described.

### Pigment (a)

An ink composition of the present invention contains a pigment (a) as an essential component of the ink composition.

The pigment (a) which is included in the ink composition in the exemplary embodiment of the present invention is not particularly limited and it may be appropriately selected from known kinds of pigments depending on the purpose.

Examples of the pigment (a) to be used in the invention include pigments described in "Dictionary of Pigments" (in English) edited by Seishiro Itoh, (2000), W. Herbst, K. Hunger, "Industrial Organic Pigments", "Handbook of Organic Pigments" authored by Isao Hashimoto, (2006), and JP-ANos. 2002-12607, 2002-188025, 2003-26978, 2003-342503, and the like.

Examples of the organic pigment include a yellow pigment, a magenta pigment, a cyan pigment, a green pigment, an orange pigment, a brown pigment, a violet pigment, and a black pigment.

The yellow pigment is a pigment exhibiting yellow color, and examples thereof include a monoazo pigment, a disazo pigment, a nonbenzidine azo pigment, an azo lake pigment, a condensed azo pigment, an acidic dye lake pigment, a basic dye lake pigment, an anthraquinone pigment, a quinophthalone pigment, a pyrazolone pigment, an acetolone pigment, a metal complex salt pigment, a nitroso pigment, a metal complex azomethine pigment, a benzimidazolone pigment, and an isoindoline pigment. Among them, examples of the pigment that may be preferably used in the invention include C.I. Pigment Yellow (hereinafter, abbreviated to PY) 1, PY3, PY12, PY13, PY14, PY16, PY17, PY18, PY24, PY60, PY74, PY83, PY93, PY94, PY95, PY97, PY100, PY109, PY110, PY115, PY117, PY120, PY128, PY138, PY139, PY150, PY151, PY153, PY154, PY155, PY166, PY167, PY173, PY175, PY180, PY181, PY185, PY194, PY213, PY214, and PY219. Among them, benzimidazolone pigments such as a monoazo pigment, a disazo pigment or an acetolone pigment are preferable, and PY74, PY120, PY150, PY151, PY154, PY155, and PY180 are more preferable from the viewpoints of the color hue developed and resistance to light.

The magenta pigment is a pigment exhibiting red or magenta color, and examples thereof include a monoazo pigment, a β-naphthol pigment, a disazo pigment, an azo lake pigment, a condensed azo pigment, an acidic dye lake pigment, a basic dye lake pigment, an anthraquinone pigment, a thio indigo pigment, a perinone pigment, a perylene pigment, a quinacridone pigment, an isoindolinone pigment, an alizarin lake pigment, a naphtholone pigment, a napthol AS lake pigment, a naphthol AS pigment, and a diketopyrrolopyrrole pigment.
Among them, examples of the pigment that may be preferably used in the invention include C.I. Pigment Red (hereinafter, abbreviated to PR) 1, PR2, PR3, PR4, PR5, PR6, PR21, PR38, PR42, PR46, PR53:1, PR57:1, PR52:1, PR46, PR48, PR81, PR83, PR88, PR144, PR149, PR166, PR179, PR178, PR190, PR224, PR123, PR224, PR19, PR122, PR202, PR207, PR209, PR180, PR83, PR170, PR171, PR172, PR174, PR175, PR176, PR177, PR179, PR185, PR194, PR208, PR214, PR220, PR221, PR242, PR247, PR254, PR255, PR256, PR262, PR268, PR264, PR269, PR272, PR282, and CI Pigment Violet 19. Among them, a quinacridone pigment is preferable, and an unsubstituted quinacridone pigment, dimethylquinacridone pigment, dichloroquinacridone pigment or mixed crystal thereof, such as PR42, PR122, PR202, PR209, PR282, and CI Pigment Violet (in some case, also refered as PV) 19 are more preferable.

The cyan pigment is a pigment exhibiting blue or cyan color, and examples thereof include a disazo pigment, a phthalocyanine pigment, an acidic dye lake pigment, a basic dye lake pigment, an anthraquinone pigment, and an alkali blue pigment. Examples of the pigment that may be preferably used in the invention include C.I. Pigment Blue (hereinafter, abbreviated to PB) 1, PB15, PB15:1, PB15:2, PB15:3, PB15:4, PB15:6, PB16, PB18, PB24, PB25, PB60, and PB79. Among them, a copper phthalocyanine pigment is preferable, and PB15, PB15:1, PB15:2, PB15:3, PB15:4, and PB15:6 are preferable.

The green pigment is a pigment exhibiting green color, and examples thereof include a phthalocyanine pigment and a metal complex pigment. Examples of the pigment that may be preferably used in the invention include C.I. Pigment Green (hereinafter, abbreviated to PG) 7, PG8, PG10, and PG 36.

The orange pigment is a pigment exhibiting orange color and examples thereof include an isoindoline pigment, an anthraquinone pigment, a β-naphthol pigment, a naphthol AS pigment, an isoindolinone pigment, a perinone pigment, a disazo pigment, a quinacridone pigment, an acetolone pigment, and a pyrazolone pigment. Examples of the pigment that may be preferably used in the invention include C.I. Pigment Orange (hereinafter, abbreviated to PO) 2, PO3, PO4, PO5, PO13, PO15, PO16, PO22, PO24, PO34, PO36, PO38, PO43, PO48, PO49, PO51, PO55, PO60, P061, PO62, PO64, PO66, PO72, and PO74.

The brown pigment is a pigment exhibiting brown color, and examples thereof include naphtholone pigments such as C.I. Pigment Brown (hereinafter, abbreviated to PBr)25 and PBr32.
The violet pigments are pigments exhibiting violet color, and examples thereof include a naphtholone pigment, a perylene pigment, a naphthol AS pigment, and a dioxazine pigment. Examples of the pigment that may be preferably used in the invention include C.I. Pigment Violet (hereinafter, abbreviated to PV)13, PV17, PV23, PV29, PV32, PV37, and PV50.

The black pigment is a pigment exhibiting black color, and examples thereof include carbon black, an indazine pigment, and a perylene pigment. Examples that may be used in the invention include C.I. Pigment Black (hereinafter, abbreviated to PBk)1, PBk7, PBk31, and PBk32.

As the volume average particle diameter of the pigment (a) used in the present invention gets smaller, the color forming property becomes more excellent. Therefore, the volume average particle diameter is preferably in a range of from 0.01 µm to 0.4 µm, and more preferably in a range of from 0.02 µm to 0.3 µm. It is preferable that the ink constituent components or the process conditions such as dispersion conditions are set such that the maximum particle diameter becomes 3 µm or less, and preferably 2 µm or less. In the present invention, by controlling the particle diameter as described above, clogging of ink head nozzle may be prevented and ink storage stability and ink transparency can be maintained, as well as curing sensitivity can be maintained in the case of using the pigment in a curable composition. In the present invention, since the polymer (b-1) described below is used, dispersibility and dispersion stability of the pigment are excellent, and even in the case of using a fine particle pigment, a uniform and stable ink composition can be obtained.

Note that, the numerical value of the volume average particle diameter of the above pigment (a) is a value obtained by using a laser diffraction scattering method, and specifically, the value may be obtained by the following method. Specifically, the value is measured using LA-920 (trade name, manufactured by Horiba Ltd.) as a measuring apparatus, and using tripropylene glycol methyl ether as a solvent for the measurement.

A content of the pigments (a) in the ink composition of the exemplary embodiment of the invention is preferably in a range of from 0.5% by mass to 15% by mass in a solid content, and more preferably in a range of from 1.0% by mass to 10% by mass from the viewpoints of color forming property and lowering a viscosity of the ink composition.

### <Maleimide compounds (b)>

The ink composition of the exemplary embodiment of the invention includes at least two of maleimide compounds (b), and at least a first one of the at least two maleimide compounds (b) is a polymer compound containing at least one group selected from the group consisting of an amino group, a carboxyl group and a phosphoric acid group (in some cases, it also referred as a polymer compound (b-1)).

### <Polymer (b-1) having at least one group selected from the group consisting of an amino group, a carboxyl group, and a phosphoric acid group>

The polymer (b-1) included in the ink composition of the present invention has a maleimido group and at least one group selected from the group consisting of an amino group, a carboxyl group, and a phosphoric acid group. The polymer (b-1) is preferably used as a pigment dispersant for dispersing the pigment in a liquid medium.
Since the amino group, carboxyl group, and phosphoric acid group are likely to form an acid-base interaction with an acid group or a base on the pigment surface, these groups adsorb to the pigment surface and, together with a segment having affinity to the solvent, they exhibit excellent dispersibility, low viscosity, and the like. Further, since maleimido groups have photocyclization reactivity, the maleimido group has excellent curability (especially, curability in a thin film system which is likely to be affected by polymerization inhibition due to oxygen). Accordingly, the ink composition of the present invention has satisfactory pigment dispersibility and additionally, excellent curability.

The maleimido group to be introduced into the polymer (b-1) according to the present invention is preferably an N-substituted maleimido group. The carbon moieties of the C=C double bond in the maleimido group may be substituted (the following Formula (A)), or may be unsubstituted (the following Formula (B)). However, in the present invention, the following Formula (A) is preferable from the viewpoints of the low viscosity, ejection stability, production suitability of the ink composition, and the like.

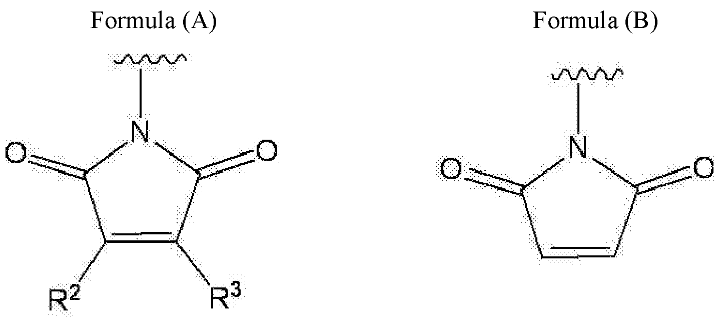

In Formula (A), each of R² and R³ represents independently an alkyl group or an aryl group. R² and R³ may form a ring group by bonding each other. R² and R³ may be each independently further substituted by a substituent(s) such as an alkyl group, a hydroxyl group or the like. Preferable example of each R² and R³ is an alkyl group which may bond each other to form a ring.
While the number of carbon atoms in the alkyl group for R² and R³ is not restricted, the number is, for example, 1 to 6, and preferably 1 to 4. Specific examples of the alkyl group include a methyl group, an ethyl group, an n-propyl group, an isopropyl group, an n-butyl group, a sec-butyl group, an isobutyl group, a tert-butyl group, an n-pentyl group, and the like.
The number of carbon atoms in the aryl group for R² and R³ is, for example, 6 to 12, and preferably 6 to 8. Specific examples of the aryl group include a phenyl group, a naphthyl group, a tolyl group, a mesityl group, and the like.
In a case where alkyl groups in R² and R³ bond each other to form a ring group, five to seven-membered ring groups which may have further an alkyl group(s) or a hydroxyl group(s) are exemplified. Specific examples thereof are described below, but the invention is not limited thereto.

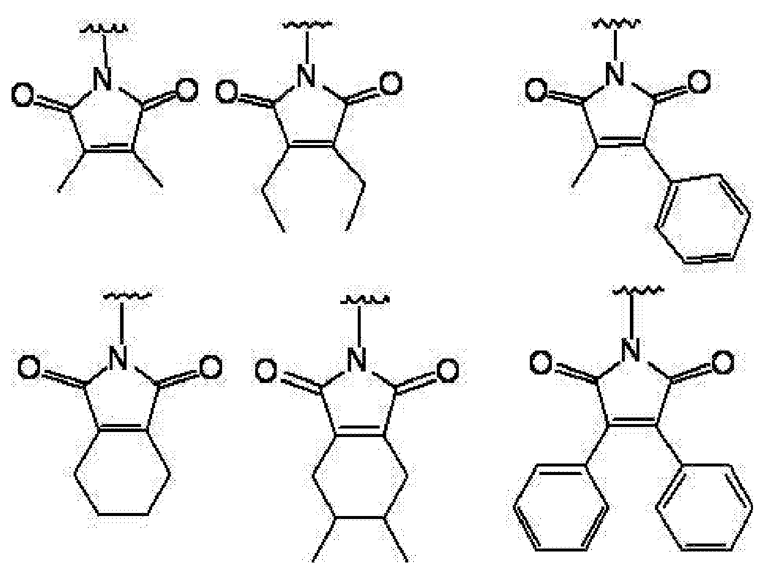

More specifically, the polymer (b-1) in the present invention preferably has a repeating unit represented by the following Formula (1).

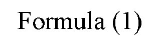

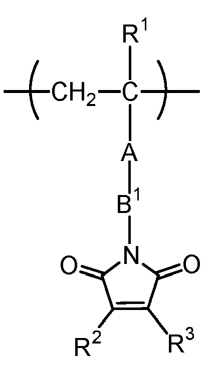

In Formula (1), R¹ represents a hydrogen atom, a methyl group or the like. A represents a single bond, an arylene group, -COO-*, -CONR⁴-* or the like. R⁴ represents a hydrogen atom or an alkyl group. Among them, a single bond, an arylene group or -COO-* is preferable and a single bond or -COO-* is more preferable as a group represented by A. Herein, * represents a bonding site to bond to B¹ group. The number of carbon atoms in the alkyl group of R⁴ is preferably 1 to 4. The alkyl group of R⁴ may be a straight chain or branched.
The number of carbon atoms in the arylene group of A is, for example, 6 to 12 and preferably 6 to 8. The arylene group may further have a substituent(s) (for example, an alkyl group, a hydroxyl group) other than the group represented by B¹. Specific examples of the arylene group represented by A include a phenylene group, a naphthylene group, a methylphenylene group, and the like.
B¹ represents a single bond, an alkylene group, an arylene group, aralkylene group or the like, and preferably B¹ represents an alkylene group. In these alkylene group, aralkylene group or the like, one or more ether bonds (-O-) or one or more ester bonds (-COO- or -OCO-) may be included in the group. Further, the alkylene group and aralkylene group may be a straight chain or branched.
The number of carbon atoms in the alkylene group of B¹ is, for example, 1 to 12 and preferably 1 to 6. The alkylene group of B¹ may be a straight chain or branched, and may have a substituent(s) such as a hydroxyl group, a halogen atom or the like. Specific examples of the alkylene group of B¹ include a methylene group, an ethylene group, a propanediyl group, a hexanediyl group, an ethylenoxyethylene group and the like.
The number of carbon atoms in the arylene group of B¹ is, for example, 6 to 12 and preferably 6 to 8. The arylene group of B¹ may have a substituent(s) other than the group represented by A (for example, an alkyl group, a hydroxyl group or the like). Specific examples of the arylene group of B¹ include a phenylene group, a naphthylene group, a biphenylene group, and the like.
The number of carbon atoms in the aralkylene group of B¹ is, for example, 7 to 18 and preferably 7 to 12. The arylene group in the aralkylene group of B¹ may have a substituent(s) other than the group represented by A (for example, an alkyl group, a hydroxyl group, a halogen atom or the like). Specific examples of the aralkylene group of B¹ include -CH2-phenylene group, a phenethylene group and the like.
Preferable group represented by B¹ is a straight chain or branched alkylene group having 1 to 6 carbon atoms.
A content of the repeating unit represented by Formula (1) in the polymer (b-1) is, for example, 1% by mass to 30% by mass, and more preferably 5% by mass to 25% by mass with respect to the mass of the polymer (b-1).
When the content of the repeating unit is within the range described above, a balance of an adsorptive segment and a steric repulsive segment in the pigment dispersant (b-1) (polymer (b-1)) is proper, whereby proper dispersion stability of the pigments dispersion is attained, and further proper curability of the composition using the same is also attained.

Preferable specific examples of monomers which derive the repeating unit represented by Formula (1) include the followings, but the invention is not limited thereto.

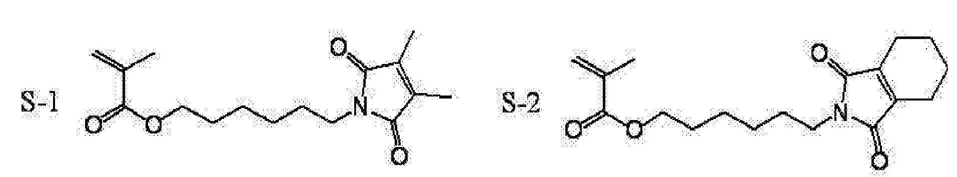

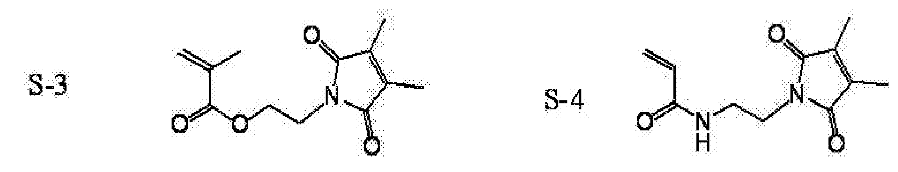

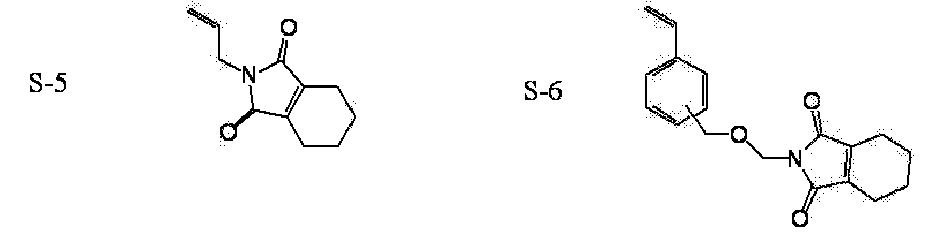

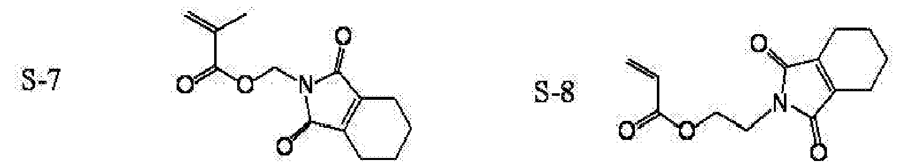

The monomers (S-1) to (S-8) in the invention, which derive the repeating unit represented by Formula (1) can be generally produced by a conventionally known method. For example, the vinyl monomers represented by the chemical formulae (S-1) to (S-8) which are precursors for the polymer may be produced based on the method described in JP-A Nos. 52-988, 4-251,258 or the like.

The polymer (b-1) in the present invention includes at least one functional group selected from the group consisting of an amino group, a carboxyl group (-COOH), and a phosphoric acid group (-OPO₃H₂). Among them, it is particularly preferable that the polymer (b-1) includes an amino group. Specific examples of the amino group include a dialkylamino group such as a dimethylamino group, a diethylamino group, a dipropylamino group, a dibutylamino group, a dihexylamino group or the like; an alkylarylamino group such as a methyphenylamino group or the like; a diarylamino group such as a diphenylamino group or the like; and the like.
Specifically, the polymer (b-1) preferably includes the repeating unit represented by the following Formula (1a).

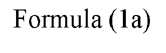

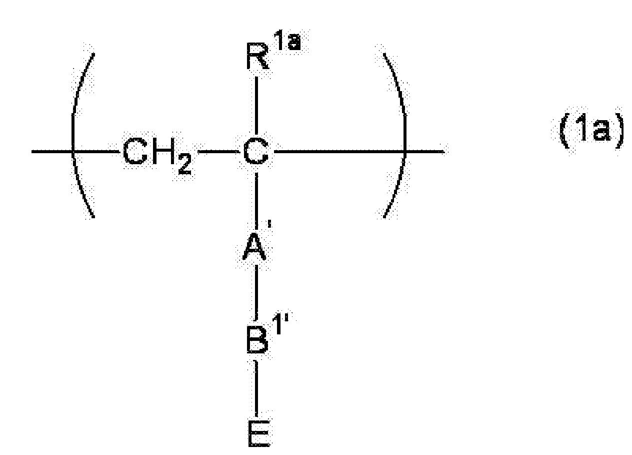

In Formula (1a), R^{1a} represents a hydrogen atom or a methyl group. A' represents a divalent linking group having the same definition as A in Formula (1). Preferable examples of the linking group represented by A' are also the same as that for A in Formula (1). B¹' represents a divalent linking group having the same definition as B¹ in Formula (1). Preferable examples of the linking group represented by B¹' are also the same as that for B¹ in Formula (1). E represents an amino group, a carboxyl group or a phosphoric acid group, and E is preferably an amino group.

Specific examples of monomers which derive the repeating unit represented by Formula (1a) include the followings, but the invention is not limited thereto.
In the invention, the expression of (meth)acrylate denotes acrylate or methacrylate, and the expression of (meth)acrylamide denotes acrylamide or methacrylamide.

As a monomer which derive the repeating unit having an amino group, a vinyl compound having an amino group may be used, for example. Examples of the vinyl compounds include (meth)acrylates such as 2-(dimethylamino)ethyl (meth)acrylate, 3-(dimethylamino)propyl (meth)acrylate, 1-(dimethylamino)-1,1-dimethylmethyl (meth)acrylate, 6-(dimethylamino)hexyl (meth)acrylate, 2-(diethylamino)ethyl (meth)acrylate, 2-(diisopropylamino)ethyl (meth)acrylate, 2-tert-butylaminoethyl (meth)acrylate, and N-methyl-N-phenylaminoethyl (meth)acrylate; aminoalkyl (meth)acrylamides such as 2-(dimethylamino)ethyl (meth)acrylamide, 2-(diethylamino)ethyl (meth)acrylamide, 3-(dimethylamino)propyl (meth)acrylamide, 1-(dimethylamino)-1,1-dimethylmethyl (meth)acrylamide, and 6-(diethylamino)hexyl (meth)acrylamide; vinylbenzylamines such as p-vinylbenzyl-N,N-dimethylamine, p-vinylbenzyl-N,N-diethylamine, p-vinylbenzyl-N,N-dihexylamine; and the like.

It is also possible to use a monomer that forms a repeating unit having an acid group, which can be used as a constituent component of a graft polymer. Examples of such a monomer include vinyl compounds having a carboxyl group, a phosphoric acid group, a sulfonic acid group, or a salt thereof obtained by neutralization.
As a monomer that forms a repeating unit having a carboxyl group, for example, a vinyl compound having a carboxyl group or the like can be used.
Examples of the vinyl compound having a carboxyl group include compounds having at least one vinyl group and at least one carboxyl group, such as (meth)acrylic acid, 2-(methacryloyloxy)ethyl succinate, 2-(methacryloyloxy)ethyl phthalate, 1-methyl-2-(methacryloyloxy)propyl phthalate, 2-(methacryloyloxy)ethyl hexahydrophthalate, acrylic acid dimer, lactone modified flexible (meth)acrylate, 2-(methacryloyloxy)ethyl maleate, vinylbenzoic acid, vinylphenyl acetate, maleic acid, itaconic acid, and vinyl benzoate. Alkali metal salts or quaternary ammonium salts of these compounds, and the like can also be used.

As a monomer that forms a repeating unit having a phosphoric acid group, for example, a vinyl compound having a phosphoric acid group or the like can be used.
Examples of the vinyl compound having a phosphoric acid group include compounds having at least one vinyl group and at least one phosphoric acid group, such as (meth)acryloyloxyethyl acid phosphate and methacryloyloxy polyalkylene glycol acid phosphate. Alkali metal salts, or quaternary ammonium salts of these compounds can also be used.
The polymer (b-1) used in the ink composition of the present invention preferably contains a repeating unit represented by Formula (2) described below, in addition to the repeating unit represented by Formula (1) described above.

The polymer (b-1) used in the ink composition of the present invention preferably contains a repeating unit represented by Formula (2) described below, as a component that enhances the adsorptivity to the pigment, in addition to the repeating unit represented by Formula (1) described above, as a structure that enhances the dispersibility of the pigment.

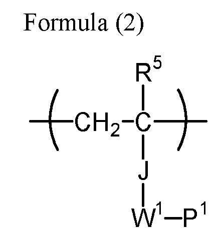

In Formula (2) above, R⁵ represents a hydrogen atom, or a methyl group. J represents a single bond, -CO-, -COO-, -CONR⁶-, -OCO- or a phenylene group. R⁶ represents a hydrogen atom, an alkyl group, an aryl group or an aralkyl group. W¹ represents a single bond or a divalent linking group. P¹ represents a condensed ring group in which 3 to 5 rings are condensed. The condensed ring group may be substituted with an alkyl group having 1 to 4 carbon atoms, a hydroxyl group or a halogen atom.

It is thought that the polymer containing the repeating unit represented by Formula (2) above has extremely good adsorptivity to the pigment (a) due to the intermolecular interaction such as hydrogen bonding or π-π interaction between P¹ (a condensed ring in which 3 to 5 rings are condensed) in Formula (2) above and the pigment (a) or a surface finishing agent of the pigment. Therefore, the polymer (b-1) can well disperse the pigment (a).

In Formula (2) above, R⁵ represents a hydrogen atom or a methyl group. In Formula (2) above, J represents a single bond, -CO-, -COO-*, -CONR⁶-*, -OCO-* or a phenylene group. * represents a bonding site to bond to W¹ group. R⁶ represents a hydrogen atom, an alkyl group, an aryl group (for example a phenyl group and the like), or an aralkyl group. The alkyl group is preferably an alkyl group having 1 to 4 carbon atoms. Among the above, a hydrogen atom or an alkyl group having 1 to 4 carbon atoms is preferred as R⁶. Among the above, as J, -COO-, -CONR⁶- or a phenylene group is preferable, -COO-, -CONH- or a phenylene group is more preferable, and -COO- or a phenylene group is even more preferable.

In Formula (2) above, W¹ represents a single bond or a divalent linking group. Examples of the divalent linking groups represented by W¹ include a straight chain, branched or cyclic alkylene group, an aralkylene group, an amido bond (-CONR⁶- or -NR⁶CO-) and the like. The alkylene group or the aralkylene group may contain an imino bond, an ester bond, an ether bond, an sulfonamido bond, a urethano bond, a ureyleno bond, a carbonate bond or a heterocyclic group in each group thereof. The alkylene group or the aralkylene group may be further substituted with a substituent.

The alkylene group represented by W¹ is preferably an alkylene group having 1 to 10 carbon atoms, and more preferably an alkylene group having 1 to 4 carbon atoms. Examples of the alkylene group include a methylene group, an ethylene group, a propylene group, a butylene group, a pentylene group, a hexylene group, an octylene group, a decylene group, and the like. Among them, a methylene group, an ethylene group, a propylene group or the like is particularly preferable.

The aralkylene group represented by W¹ is preferably an aralkylene group having 7 to 13 carbon atoms. Examples of the aralkylene group include a benzylidene group, a cinnamylidene group, and the like.
The arylene group represented by W¹ is preferably an arylene group having 6 to 12 carbon atoms. Examples of the arylene group include a phenylene group, cumenylene group, a mesitylene group, a tolylene group, a xylylene group, and the like. Among them a phenylene group is particularly preferable. The alkylene group or the aralkylene group represented by W¹ may have a substituent. Examples of the substituent include a straight chain or branched alkyl group having 1 to 4 carbon atoms, a hydroxyl group, or an alkoxyl group having 1 to 4 carbon atoms.

Further, in the divalent linking group represented by W¹ may contain an imino bond (-NH-), an ester bond (-COO- or -OCO-), an ether bond (-O-), an sulfonamido bond (-NHSO₂- or -SO₂NH-)), a urethane bond (-NHCOO- or -OCONH-), a ureylene bond (-NHCONH-), a carbonate bond (-OCOO-) or a heterocyclic group. A heterocycle which derives the heterocyclic group includes five to seven membered heterocyclic compounds having an oxygen atom or a nitrogen atom such as dioxane, dioxolan, piperazine or the like.

As W¹, a single bond, or an unsubstituted or substituted with a hydroxyl group or an amino group, straight chain or branched alkylene group having 1 to 12 carbon atoms is preferable. The alkylene group may contain an imino bond, an ester bond, an ether bond, a ureyleno bond, or a ureyleno bond.

In Formula (2) above, P¹ represents a condensed ring group in which 3 to 5 rings are condensed, and the condensed ring may be substituted by an alkyl group having 1 to 4 carbon atoms, a carboxyl group, a hydroxyl group, or a halogen atom. It is thought that P¹ in the repeating unit of Formula (2) interacts with the pigment, and adsorbs to the pigment. The condensed ring represents a compound in which 3 to 5 rings selected from the groups consisting of an aliphatic ring, an aromatic ring, a heterocycle, and a cyclic ketone are condensed, and it is preferable that at least one of the rings to be condensed is an aromatic ring. It is thought that, by including an aromatic ring, the planarity of the condensed ring is enhanced and as a result, the adsorptivity to the pigment is enhanced. Preferable examples of the aliphatic ring which may form the condensed ring include cyclopropane, cyclobutane, cyclopentane, cyclohexane, and cycloheptane. Preferable examples of the aromatic ring which may form the condensed ring include benzene. Preferable examples of the heterocycle which may form the condensed ring include furan, pyrrole, imidazole, pyridine, pyrrolidine, piperidine, morpholine, piperazine, piperidone, 4-oxothiane, cyclohexanedione, succinimide, glutarimide, valerolactone, valerolactam, and oxazine. The condensed ring is contained in a known organic pigment from the viewpoint of enhancing the interaction to the organic pigment.
It is also preferable that the condensed ring is a partial structure contained in a known organic pigment. Since the condensed ring contained in an organic pigment has high planarity and tends to include a hydrogen bonding group, it can be assumed that the condensed ring is likely to interact with the π plane or the hydrogen bonding group in the pigment, and thus has excellent adsorptivity. In a case in which the condensed ring is a partial structure of a pigment, when the structure of the condensed ring is a partial structure of the pigment (a), the adsorptivity is further enhanced and the dispersibility tends to be enhanced.

Preferable examples of the condensed ring which derives the condensed ring group represented by P¹ include groups obtained by removing one hydrogen atom from acridone, quinacridone, anthraquinone, naphthalimide, carbazole, phenazine, naphthoxazole, acridine, dibenzofuran, 2,3-naphthalenedicarboximide, acridobenzopiperidinone, phenoxazine, phenothiazine, fluorene, fluorenone, anthrone, xanthone, thioxanthone or anthracene. Among them, acridone, acridobenzopiperidinone, quinacridone, anthraquinone, naphthalimide, carbazole, acridine, dibenzofuran, 2,3-naphthalenedicarboximide, phenothazine, and fluorenone are preferable, and acridone and naphthalimide are more preferable. These condensed rings may be substituted by an alkyl group having 1 to 4 carbon atoms, a hydroxyl group, or a halogen atom.

The polymer (b-1) including the repeating unit represented by Formula (2) above is preferably synthesized through introducing a monomer that derives the repeating unit represented by Formula (2) by a homogeneous polymerization reaction, from the viewpoint of production stability. The monomer that derives the repeating unit of Formula (2) having a partial skeleton of a pigment tends to have low solubility, however by introducing the monomer by a homogeneous polymerization reaction, the repeating unit of Formula (2) can stably be introduced into the polymer (b-1) at a desired composition ratio.
Further, the polymer (b-1) including the repeating unit represented by Formula (2) above can also be synthesized through introducing a vinyl monomer that derives the repeating unit represented by Formula (2).

From the viewpoints of the adsoptivity to the pigment and the solubility to the dispersion medium and polymerization solvent, a content of the repeating unit represented by Formula (2) above with respect to the total mass of the polymer (b-1) is preferably from 2% by mass to 40% by mass, more preferably from 5% by mass to 35% by mass, and most preferably from 5% by mass to 30% by mass.
Preferable specific examples of the monomer that derives the repeating unit represented by Formula (2) above include the monomers (exemplary monomers: M-1 to M-17) described below. However, the present invention is not limited to these specific examples.

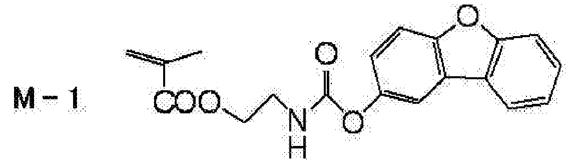

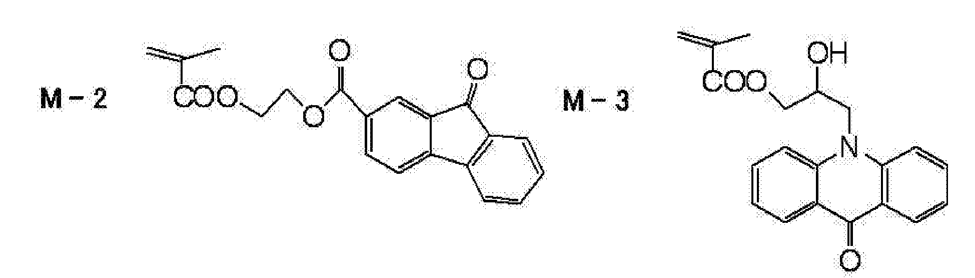

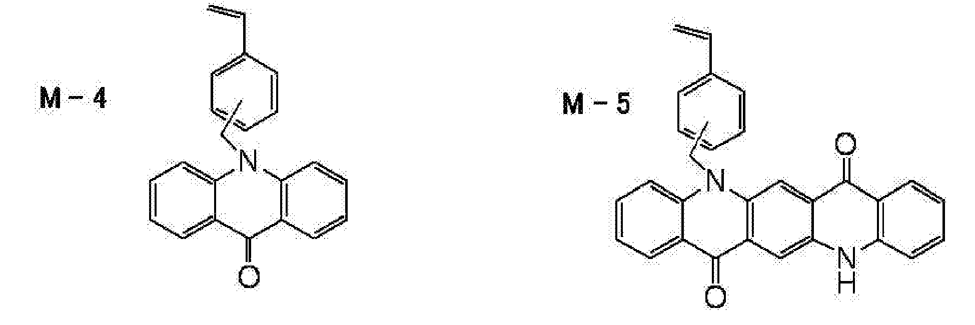

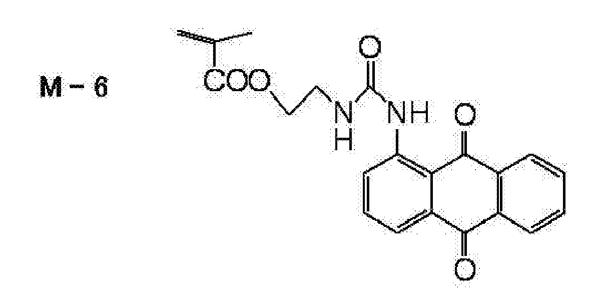

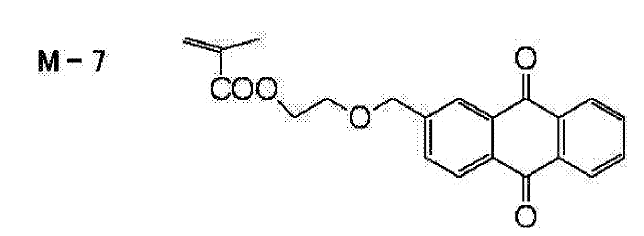

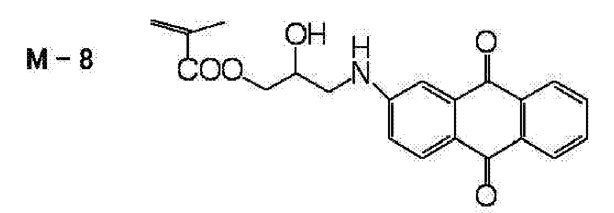

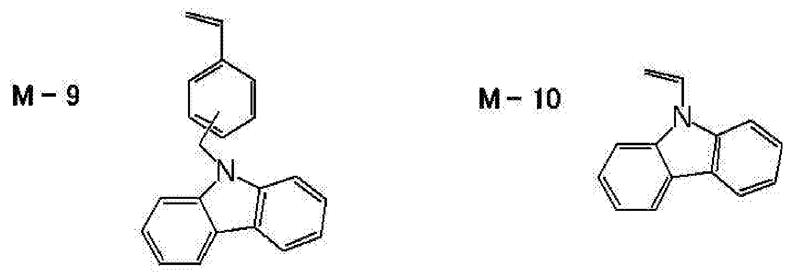

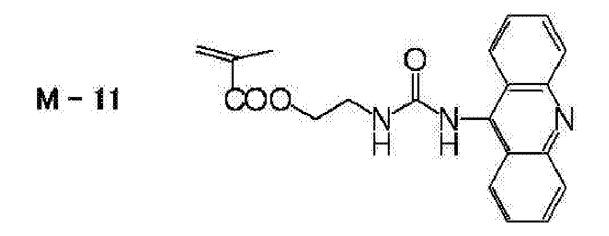

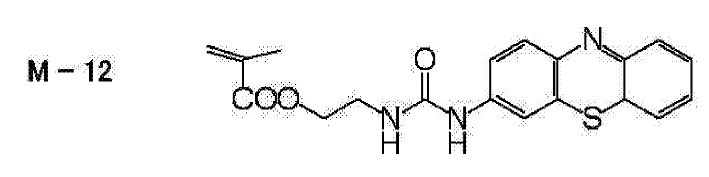

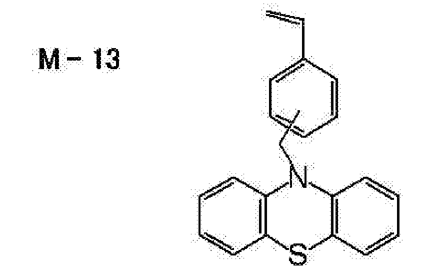

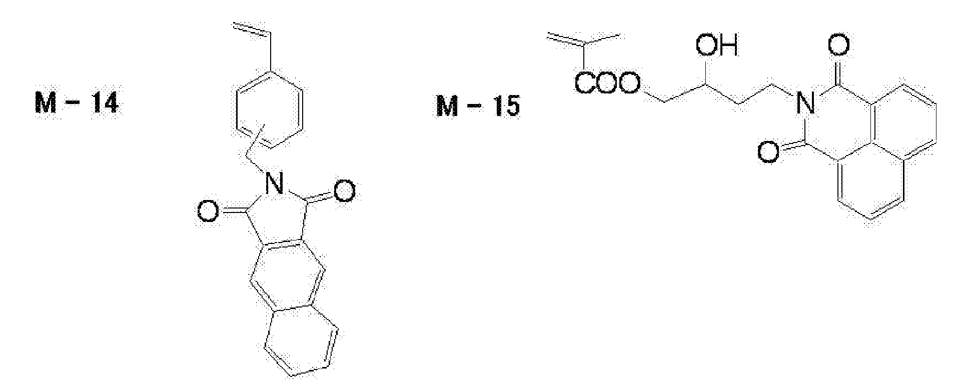

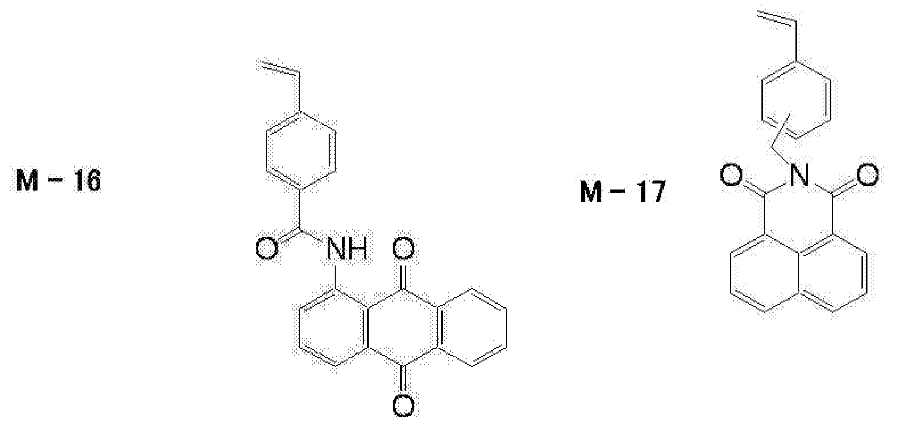

The above monomers, M-1 to M-17, can be produced according to a conventionally known method. The methods for producing the monomers are not particularly limited. For example, the monomers can be obtained by the methods described in JP-ANos. 2010-13630 and 2008-274219, or through a reaction between a monomer having a reactive functional group, such as (meth)acrylic acid, (meth)acryloyl chloride, isocyanatoethyl (meth)acrylate, glycidyl methacrylate, hydroxyalkyl (meth)acrylate, chloromethylstyrene, hydroxystyrene, halogenized styrene, or vinylbenzoic acid, and a functional group possessed by a condensed ring in which 3 to 5 rings are condensed or a substitution product thereof.

The polymer (b-1) according to the present invention further may include other repeating units in addition to the repeating unit represented by Formula (1), the repeating unit represented by Formula (1a) or the repeating unit represented by Formula (2). In this case, it is particularly preferable that the polymer (b-1) is a graft copolymer having another repeating unit derived from a polymerizable oligomer (hereinafter, it may be merely referred to as "polymerizable oligomer") having an ethylenically unsaturated double bond at a terminal of the oligomer. The polymerizable oligomer having an ethylenically unsaturated double bond at a terminal thereof is a compound having a predetermined molecular weight, and thus this oligomer is also referred to as a macromonomer.

The specific polymer (b-1) that contains the repeating unit derived from the polymerizable oligomer can disperse a pigment more stably by a high affinity of the polymerizable oligomer to a liquid medium. Accordingly, it is preferred that the polymerizable oligomer has a high affinity to the liquid medium. The affinity of the polymerizable oligomer to the liquid medium can be estimated, for example, by a solubility parameter proposed by HOY (for example, refer to "Journal of Paint Technology" (in English), 1970, vol. 42, pages 76 - 78).

Since it is said that the solubility of a solute to a solvent is favorable in a case where the values of solubility parameters δt of the solute and the solvent are close to each other, the solubility parameter of the polymerizable oligomer is in the range of preferably from 80% to 120%, and more preferably from 85% to 115% of the solubility parameter of the liquid medium. This preferred range of the solubility parameter for the polymerizable oligomer is also identical for the ink composition, etc. which is formed by using the pigment dispersion of the invention. As far as the value of the solubility parameter is within the range described above, the structure of the polymerizable oligomer is not particularly limited. When the solubility parameter of the polymerizable oligomer is within the range described above, the dispersion stability of the pigment contained in the pigment dispersion becomes more excellent.

The polymerizable oligomer has a polymer chain moiety and a polymerizable functional group moiety having an ethylenically unsaturated double bond at a terminal thereof. It is preferred that the group having the ethylenically unsaturated double bond is present only on one terminal of the polymer chain from a view point of obtaining a desired graft polymer. As the group having the ethylenically unsaturated double bond, a (meth)acryloyl group and a vinyl group are preferred, and a (meth)acryloyl group is particularly preferred.
The polymer chain moiety in the polymerizable oligomer is generally a homopolymer or a copolymer formed of at least one monomer selected from the group consisting of an alkyl(meth)acrylate, styrene and a derivative thereof, acrylonitrile, vinyl acetate, and butadiene; polyethylene oxide; polypropylene oxide; or polycaprolactone.

The polymerizable oligomer is preferably a polymerizable oligomer represented by the following Formula (3).

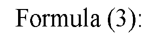

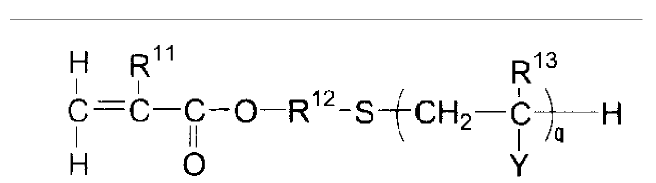

In Formula (3), R¹¹ and R¹³ each independently represent a hydrogen atom or a methyl group, R¹² represents a straight chain or branched alkylene group having 1 to 12 carbon atoms (preferably, an alkylene group having 2 to 4 carbon atoms; the alkylene group may have a substituent (for example, a hydroxyl group) and, further, may be bonded via an ester bond, ether bond, sulfido bond, amido bond, or the like).
Y represents a phenyl group or a phenyl group having an alkyl group having 1 to 4 carbon atoms, or -COOR¹⁴ in which R¹⁴ represents an alkyl group having 1 to 12 carbon atoms (preferably 1 to 6 carbon atoms), a phenyl group, or an aryl alkyl group having 7 to 10 carbon atoms. Y represents preferably a phenyl group or a -COOR¹⁴ in which R¹⁴ is an alkyl group having 1 to 12 carbon atoms (preferably 1 to 6 carbon atoms).
q represents a number of from 15 to 200, preferably from 20 to 150, and more preferably from 20 to 100.

Preferable examples of the polymerizable oligomer (macromonomer) include poly[methyl(meth)acrylate], poly[n-butyl(meth)acrylate], and poly[iso-butyl(meth)acrylate], and a polymer in which a (meth)acryloyl group is bonded to one of terminal of the molecule of polystyrene. The polymerizable oligomer that is commercially available includes a polystyrene oligomer methacryloylated on one terminal (Mn = 6000, trade name: AS-6, manufactured by Toagosei Co., Ltd.), a poly(methyl methacrylate) oligomer methacryloylated at one terminal (Mn = 6000, trade name: AA-6, manufactured by Toagosei Co., Ltd.), and a poly(n-butyl acrylate) oligomer methacryloylated at one terminal (Mn = 6000, trade name: AB-6, manufactured by Toagosei Co., Ltd.).

As the polymerizable oligomer, not only the polymerizable oligomer represented by Formula (3) but also a polymerizable oligomer represented by the following Formula (4) are preferable.
In a case of using a polymerizable compound (c) together (for example, a case using a pigment dispersion of the present invention, which contains the polymerizable compound (c), a case using a cured product formed by curing a pigment dispersion of the present invention after addition of the polymerizable compound (c), or the like), it is particularly preferable to properly select the polymerizable oligomer according to the polymerizable compound (c).

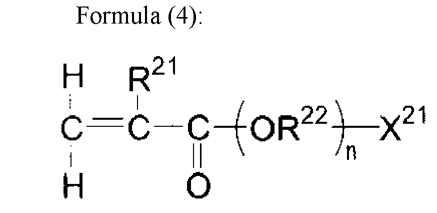

In Formula (4), R²¹ represents a hydrogen atom or a methyl group, and R²² represents a straight chain or branched alkylene group having 1 to 8 carbon atoms. X²¹ represents -OR²³ or -OCOR²⁴. R²³ and R²⁴ represent a hydrogen atom, an alkyl group, or an aryl group. n represents an integer of from 2 to 200.

In Formula (4), R²¹ represents a hydrogen atom or a methyl group.
R²² represents a straight chain or branched alkylene group having 1 to 8 carbon atoms and, among them, an alkylene group having 1 to 6 carbon atoms is preferable and an alkylene group having 2 to 3 carbon atoms is more preferable.
In a case where X²¹ represents -OR²³, R²³ preferably represents a hydrogen atom, an alkyl group having 1 to 18 carbon atoms, a phenyl group, or a phenyl group substituted with an alkyl group having 1 to 18 carbon atoms. In a case where X²¹ represents -OCOR²⁴, R²⁴ preferably represents an alkyl group having 1 to 18 carbon atoms.
n represents an integer of from 2 to 200, preferably from 5 to 150, and particularly preferably from 10 to 100.

The polymerizable oligomer represented by Formula (4) includes, for example, polyethylene glycol mono(meth)acrylate, polypropylene glycol mono(meth)acrylate, polyethylene glycol polypropylene glycol mono(meth)acrylate, and polytetramethylene glycol monomethacrylate, which may be commercial products or may be synthesized properly.

The polymerizable oligomer represented by Formula (4) is also available as commercial products as described above. Examples of the commercial products include methoxy polyethylene glycol methacrylate (trade name; NK ESTER M-40G, M-90G M-230G, all manufactured by Shin-Nakamura Chemical Co., Ltd.), BLEMMER PME-100, PME-200, PME-400, PME-1000, PME-2000, and PME-4000 (trade name; all manufactured by NOF Corporation), polyethylene glycol monomethacrylate (trade name: BLEMMER PE-90, PE-200, PE-350, all manufactured by NOF Corporation), lauryloxy polyethylene glycol acrylate (trade name: BLEMMER ALE series, manufactured by NOF Corporation), polypropylene glycol monomethacrylate (trade name: BLEMMER PP-500, PP-800, PP-1000, all manufactured by NOF Corporation), polyethylene glycol polypropylene glycol monomethacrylate (trade name: BLEMMER 70PEP-370B, manufactured by NOF corporation), polyethylene glycol polytetramethylene glycol monomethacrylate (trade name: BLEMMER 55-PET-800, manufactured by NOF corporation), polypropylene glycol polytetramethylene glycol monomethacrylate (trade name: BLEMMER NHK-5050, manufactured by NOF corporation).

The weight average molecular weight (Mw) in terms of polystyrene of the polymerizable oligomer is preferably in the range of from 500 to 20,000, and particularly preferably from 2,000 to 15,000.
A content of the repeating units derived from the polymerizable oligomer contained in the polymer (b-1) is preferably in the range of from 40 % by mass to 95.5% by mass, more preferably from 50 % by mass to 92.5% by mass, and most preferably from 55 % by mass to 90% by mass with respect to total mass of the polymer (b-1). When the content of the repeating units derived from the polymerizable oligomer in the polymer (b-1) is within the range described above, the affinity to the liquid medium becomes good and the adsorption of the polymer (b-1) to the pigment becomes more excellent. As a result, viscosity of the pigment dispersion and that of the ink composition as an application form thereof can be suppressed effectively.

Specific examples of the polymerizable oligomer used preferably in the invention are to be shown below. However, the invention is not restricted to them.

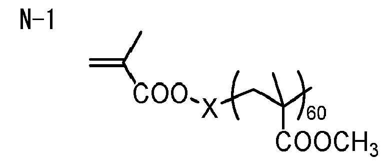

X: organic group
AA-6: trade name, manufactured by Toagosei Co., Ltd. 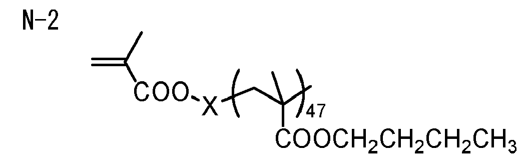 X: organic group
AB-6: trade name, manufactured by Toagosei Co., Ltd. 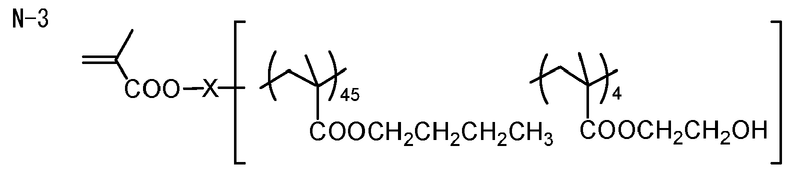 X: organic group
AX-707: trade name, manufactured by Toagosei Co., Ltd. 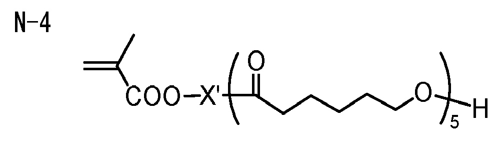 X': organic group
PLACCEL FM-5: trade name, manufactured by DAICEL CHEMICAL INDUSTRIES LTD. 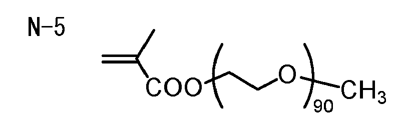 BLEMMER PME-4000: trade name, manufactured by NOF Corporation. 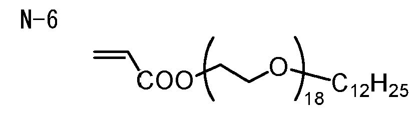 BLEMMER ALE-800: trade name, manufactured by NOF Corporation.

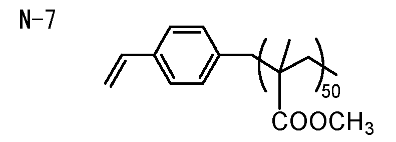

The polymer (b-1) may be a copolymer of a monomer deriving a repeating unit represented by Formula (1), a monomer having an amino group, a carboxyl group or a phosphoric acid group, the polymerizable oligomer and other copolymerizable monomer (s) that is copolymerizable with these monomers. Examples of the other copolymerizable monomer include alkyl (meth)acrylates (for example, methyl (meth)acrylate, ethyl (meth)acrylate, n-butyl (meth)acrylate, i-butyl (meth)acrylate or the like); alkylaryl (meth)acrylates (for example, benzyl (meth)acrylate, phenoxyethyl (meth)acrylate or the like), substituted alkyl (meth)acrylates (for example, glycidyl (meth)acrylate, 2-hydroxyethyl (meth)acrylate, dimetylaminoethyl (meth)acrylate or the like); unsaturated carboxylic acids (for example, (meth)acrylic acid, crotonic acid, itaconic acid, maleic acid, or fumaric acid); aromatic vinyl compounds (for example, styrene, α-methylstyrene, vinyl toluene, 2-vinylpyridine, 4-vinylpyridine, N-vinylimidazole or the like); vinyl carboxylates (for example, vinyl acetate, vinyl propionate or the like); vinyl cyanates (for example, (meth)acrylonitrile, α-chloroacrylonitrile or the like), vinyl ethers (for example, cyclohexyl vinyl ether, 4-hydroxybutyl vinyl ether or the like); and aliphatic conjugated dienes (for example, 1,3-butadiene, isoprene or the like). Among them, substituted alkyl (meth)acrylates, alkyl (meth)acrylates, alkylaryl (meth)acrylates are preferable.

In a case in which the polymer (b-1) has a repeating unit derived from the other copolymerizable monomers other than a repeating unit represented by Formula (1), a repeating unit represented by Formula (2), a repeating unit represented by Formula (1a), and a repeating unit derived from the polymerizable oligomer, the repeating unit derived from the other copolymerizable monomers is preferably contained in the range of 30% by mass or less with respect to the total mass of the repeating units contained in the polymer (b-1).

A weight average molecular weight (Mw) of the polymer (b-1) is preferably in a range of from 10,000 to 500,000, and particularly preferably in a range of from 15,000 to 200,000, from the viewpoints of dispersion stability of the pigment and viscosity of the pigment dispersion. The weight average molecular weight (Mw) is a weight average molecular weight in term of polystyrene measured by gel permeation chromatography (carrier: N-methyl pyrrolidone containing 1 millimole of lithium bromide).

Specific examples of the polymer (b-1) which is a preferred exemplary embodiment include the following exemplary compounds, however the invention is not limited thereto.

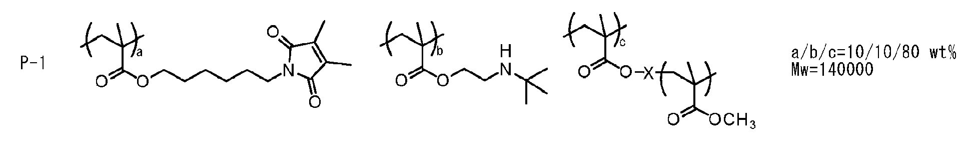

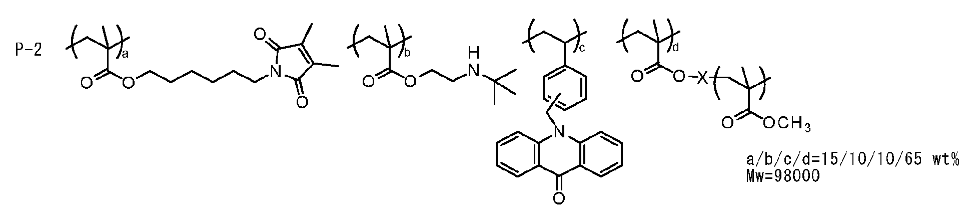

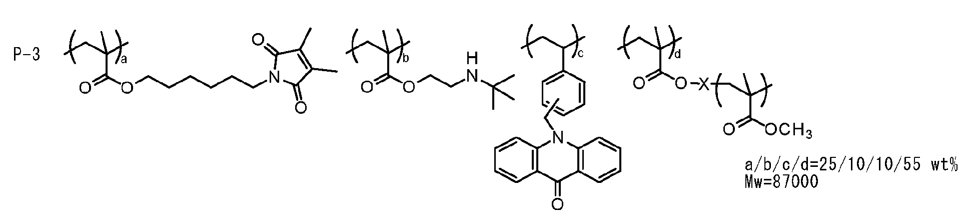

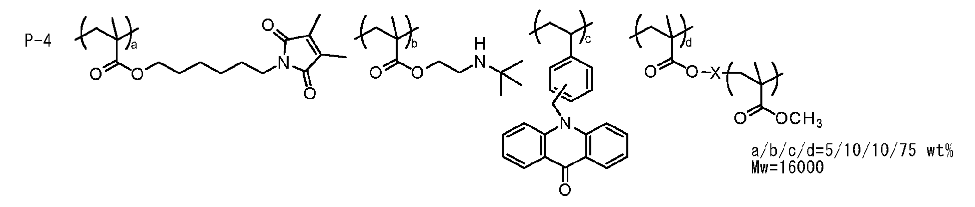

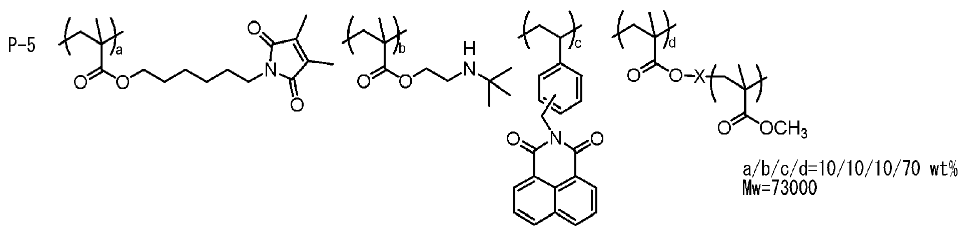

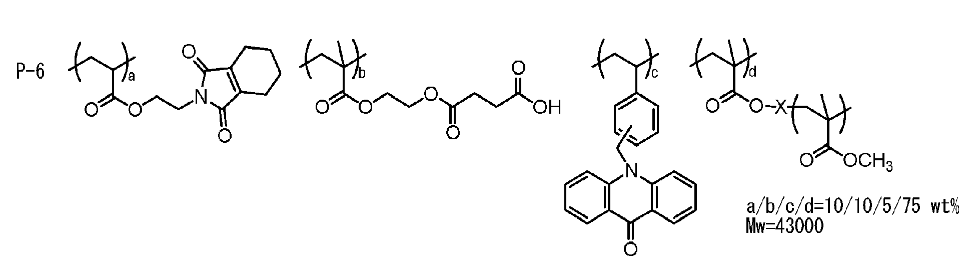

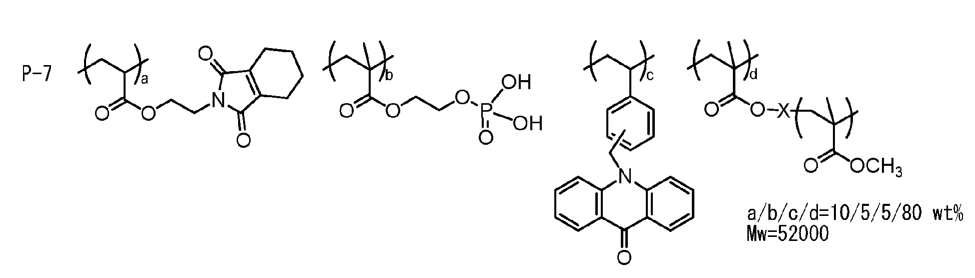

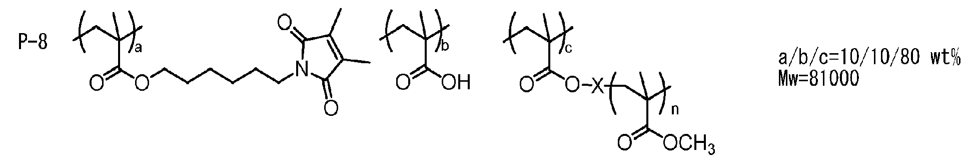

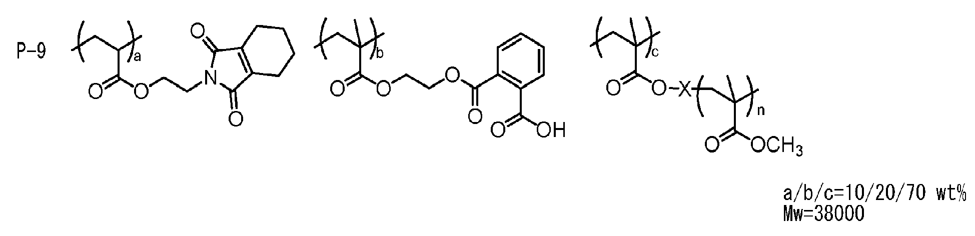

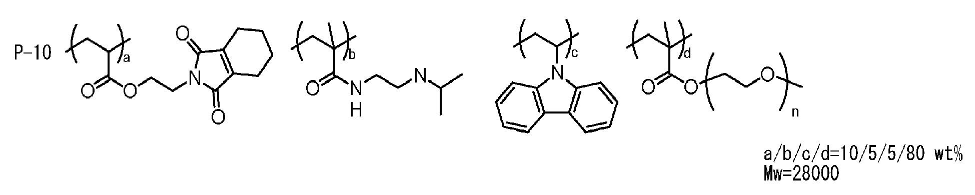

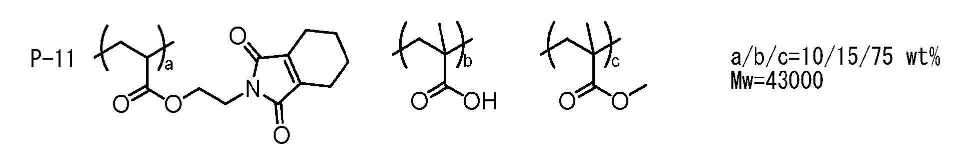

The specific polymers represented by chemical formulae from (P-1) to (P-11) can be obtained and produced by polymerizing the monomers described above with a known polymerization method based on the polymerization method described, for example, in JP-A Nos. 52-988, 55-154970 or 2010-13630; "Langmuir" Vol. 18 (14), pages 5414 to 5421 (2002); or the like.

The ink composition of the present invention may include one kind of the polymer (b-1) or two or more kinds thereof in a combination. A content of the polymer (b-1) in the pigment dispersion is preferably in a range of from 1 part by mass to 100 parts by mass, and more preferably in a range of from 5 parts by mass to 50 parts by mass with respect to 100 parts by mass of the pigments (a).

Further, in the ink composition of the present invention, a known pigment dispersant can be used in combination, in addition to the polymer (b-1), as long as the effects are not impaired. The addition amount thereof is preferably in a range of from 5 parts by mass to 50 parts by mass, with respect to 100 parts by mass of the polymer (b-1). Furthermore, it is possible to use, as an auxiliary dispersant, a synergist according to the kind of the pigment (a), as necessary. It is preferable that the auxiliary dispersant is added in an amount of from 1 part by mass to 30 parts by mass with respect to 100 parts by mass of the pigment (a).

### <Maleimide compound (b-2)>

The ink composition of the present invention contains at least a second one of the at least two maleimide compounds (b), maleimide compound (b-2), (hereinafter, also referred to as "compound (b-2)"), other than the polymer (b-1). The compound (b-2) is not limited as long as the compound has a maleimido group. The compound (b-2) is preferably a maleimide compound other than the (b-1) polymer. For example, the compound (b-2) is preferably a low molecular weight compound having an amino group, a carboxyl group, or a phosphoric acid group; a compound that does not have any of an amino group, a carboxyl group, or a phosphoric acid group; or the like, and is more preferably a compound that does not have any of an amino group, a carboxyl group, or a phosphoric acid group. The compound (b-2) is preferably polyfunctional, for the purpose of performing crosslinking reaction, and is particularly preferably a compound having two or more maleimido groups represented by Formula (5). Hereinafter, the compound that contains a maleimido group and does not have any of an amino group, a carboxyl group, or a phosphoric acid group is described in detail below.

The compound having two or more maleimido groups may be used without any restriction as long as the compound has two or more groups represented by Formula (5) in the molecule. When the compound having two or more groups represented by Formula (5) is used, the crosslinking reaction of the ink composition can be promoted.

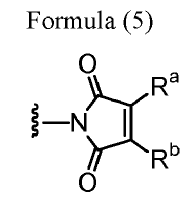

(In Formula (5), R^{a} and R^{b} each independently represent a hydrogen atom or an alkyl group having 1 to 4 carbon atoms, and R^{a} and R^{b} may bond each other to form a 4- to 6-membered ring.)

In Formula (5), R^{a} and R^{b} may have a substituent or no substituent, but it is preferable that R^{a} and R^{b} do not have a substituent.

R^{a} and R^{b} each independently represent a hydrogen atom or an alkyl group having 1 to 4 carbon atoms, and the alkyl group having 1 to 4 carbon atoms may have a straight chain structure or a branched structure. Specific examples thereof include a methyl group, an ethyl group, a propyl group, an isopropyl group, a butyl group, an isobutyl group, a sec-butyl group, and a tert-butyl group. R^{a} and R^{b} may bond each other to form a 4- to 6-membered ring. From the viewpoints of film properties of the ink cured film, such as solvent resistance after the ink composition has been cured and adhesion to a base material, R^{a} and R^{b} each independently represent, preferably, an alkyl group having one or two carbon atoms, namely, a methyl group or an ethyl group, and particularly preferably a methyl group. Further, in a case in which R^{a} and R^{b} bond each other to form a 4- to 6-membered ring, it is preferable that the formed ring is a 5- or 6-membered ring, and it is more preferable that the formed ring is a 6-membered ring.

The compound (b-2) may be a low molecular weight compound having a molecular weight of from 300 to 2,000, or may be a polymer having a weight average molecular weight of 5,000 or more.

In a case in which the compound (b-2) is a low molecular weight compound having a molecular weight of from 300 to 2,000, the number of the groups represented by Formula (5) included in one molecule of the compound (b-2) is preferably from 2 to 6, more preferably from 2 to 4, even more preferably 2 or 3, and particularly preferably 2.

In the case in which the compound (b-2) is a low molecular weight compound having a molecular weight of from 300 to 2,000, it is preferable that the compound (b-2) is a compound represented by the following Formula (5-L).

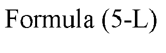

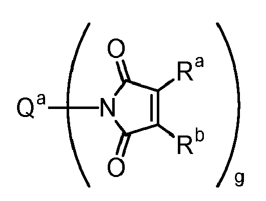

(In Formula (5-L), R^{a} and R^{b} each independently represent a hydrogen atom or an alkyl group having 1 to 4 carbon atoms, and R^{a} and R^{b} may bond each other to form a 4- to 6-membered ring. Q^{a} represents a linking group having a valency of g. g represents an integer of 2 or more.)

In Formula (5-L), R^{a} and R^{b} each independently represent a hydrogen atom or an alkyl group having 1 to 4 carbon atoms; and R^{a} and R^{b} may bond each other to form a 4- to 6-membered ring. R^{a} and R^{b} in Formula (5-L) (including the preferable examples) are the same as those exemplified as R^{a} and R^{b} in Formula (5) described above.

In Formula (5-L), Q^{a} represents a linking group having a valency of g. Q^{a} preferably represents a residue obtained by removing g hydrogen atoms (the number of the hydrogen atoms that are removed being g) from hydrocarbon. In a case in which Q^{a} represents a residue obtained by removing g hydrogen atoms from hydrocarbon, the hydrocarbon may contain an ether group, an ester group, an amino group, an amide bond, a silyl ether group, a thiol group, or the like. The hydrocarbon preferably has 1 to 30 carbon atoms, and more preferably 1 to 20 carbon atoms. The hydrocarbon is preferably an aromatic hydrocarbon, and examples of the aromatic hydrocarbon include benzene and naphthalene.

In Formula (5-L), g represents an integer of 2 or more, and preferably represents an integer of from 2 to 6, more preferably from 2 to 4, even more preferably 2 or 3, and particularly preferably 2.

In the case in which the compound (b-2) is a low molecular weight compound having a molecular weight of from 300 to 2,000, the following compounds can be preferably used in the present application.

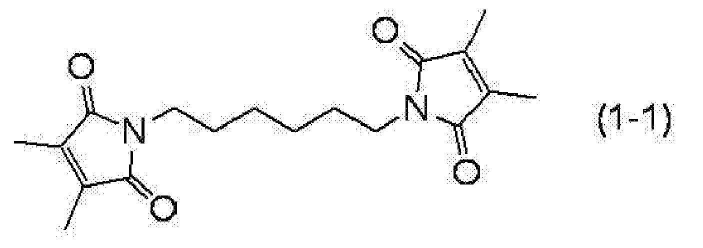

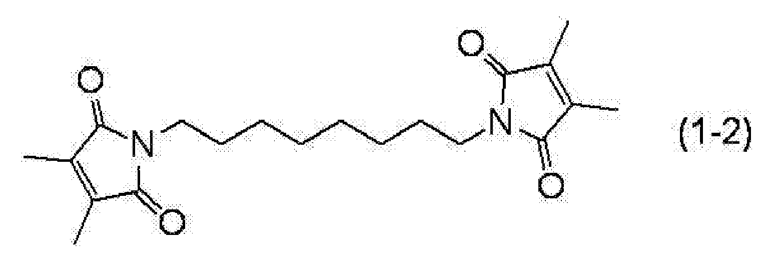

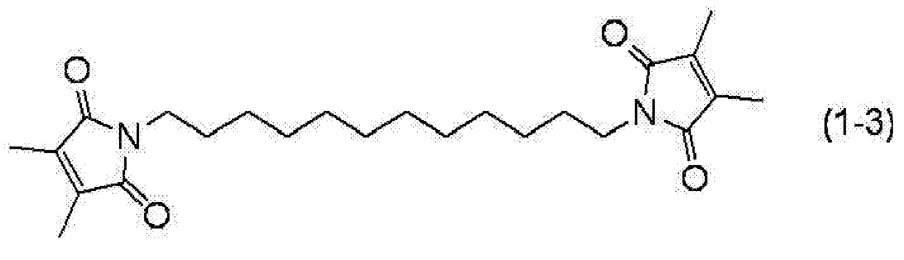

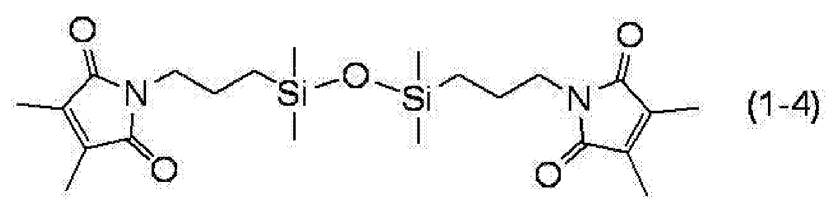

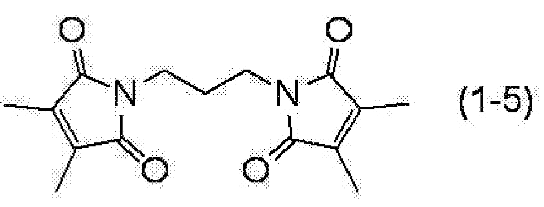

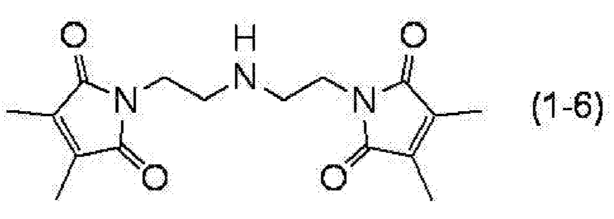

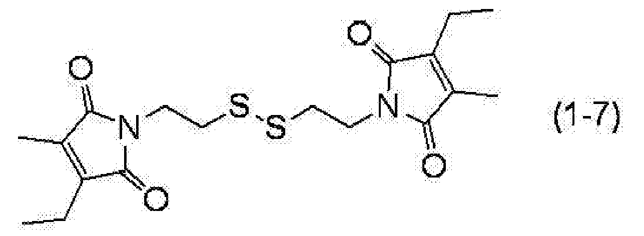

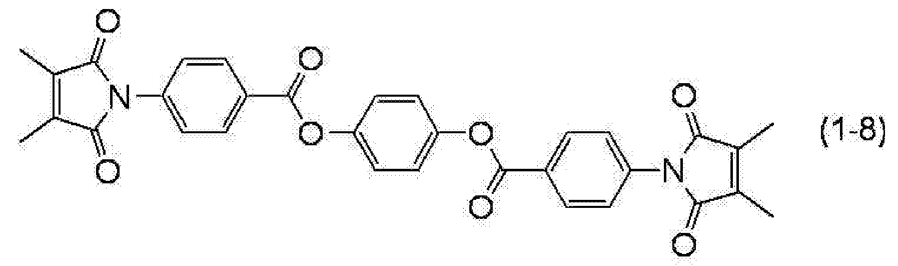

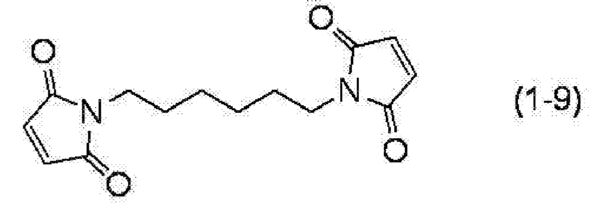

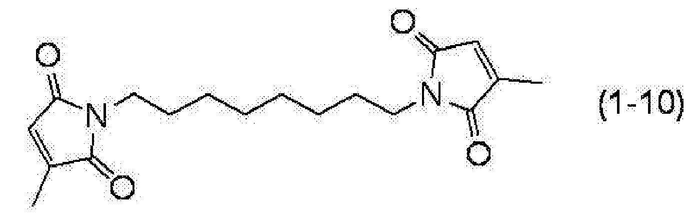

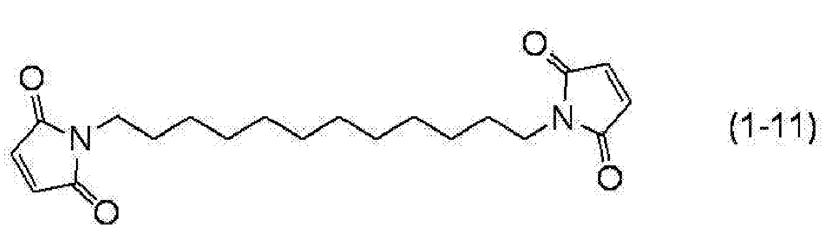

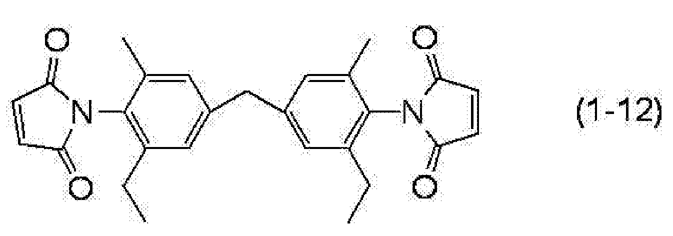

In a case in which the compound (b-2) is a polymer having a weight average molecular weight of 5,000 or more, it is enough that two or more groups represented by Formula (5) are included in one molecule of the compound (b-2). Although not particularly limited, the number of the groups represented by Formula (5) included in one molecule of the compound (b-2) is preferably from 2 to 500, and more preferably from 10 to 200.

From the viewpoints of dischargeability and the like when the ink composition is discharged by an inkjet method, the weight average molecular weight is preferably from 5,000 to 200,000, more preferably from 7,000 to 100,000, even more preferably from 10,000 to 50,000, and particularly preferably from 10,000 to 30,000.

Note that, the weight average molecular weight is measured by gel permeation chromatography (GPC). HLC-8020 GPC (trade name, manufactured by Tosoh Corp.) is used for GPC, and TSKGEL SUPER HZM-H, TSKGEL SUPER HZ4000, and TSKGEL SUPER HZ200 (all trade names, manufactured by Tosoh Corp.; 4.6 mmID × 15 cm) are used as the columns, and THF (tetrahydrofuran) is used as the eluate.

In the case in which the compound (b-2) is a polymer having a weight average molecular weight of 5,000 or more, as long as the polymer has a group represented by Formula (1) in the side chain or at a terminal of the polymer, there is no limitation as to the other polymer structure. Examples of the polymer structure which can be used include polymer structures of polyacrylate, polyurethane, polyester, polyethylene imine, polystyrene, or the like. From the viewpoints of dischargeability of the ink composition by an inkjet method, solvent resistance after the ink composition has been cured and adhesion to a base material, and the like, the compound (b-2) preferably has at least one polymer structure selected from the group consisting of a polyacrylate structure and a polyurethane structure, and particularly preferably has a polyacrylate structure.

In the case in which the compound (b-2) is a polymer, the compound (b-2) is preferably a polymer including a structure represented by the following Formula (5').

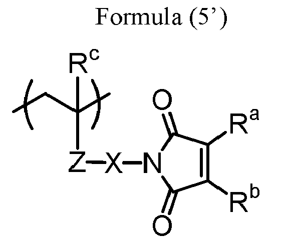

(In Formula (5'), R^{a} and R^{b} each independently represent a hydrogen atom or an alkyl group having 1 to 4 carbon atoms, and R^{a} and R^{b} may bond each other to form a 4- to 6-membered ring. R^{c} represents a hydrogen atom or a methyl group. Z represents -COO- or -CONR^{d} -, and R^{d} represents a hydrogen atom or an alkyl group having 1 to 4 carbon atoms. X represents a divalent organic group.)

In Formula (5'), R^{a} and R^{b} each independently represent a hydrogen atom or an alkyl group having 1 to 4 carbon atoms, and R^{a} and R^{b} may bond each other to form a 4- to 6-membered ring. R^{a} and R^{b} in Formula (5') (including the preferable examples) are the same as those exemplified as R^{a} and R^{b} in Formula (5) described above.

In Formula (5'), R^{c} represents a hydrogen atom or a methyl group. R^{c} preferably represents a methyl group.

In Formula (5'), Z represents -COO- or -CONR^{d} -. Z preferably represents -COO-.
Further, R^{d} represents a hydrogen atom or an alkyl group having 1 to 4 carbon atoms. The alkyl group having 1 to 4 carbon atoms may have a straight chain structure or a branched structure. Specific examples thereof include a methyl group, an ethyl group, a propyl group, an isopropyl group, a butyl group, an isobutyl group, a sec-butyl group, and a t-butyl group. R^{d} preferably represents a hydrogen atom or an alkyl group having 1 or 2 carbon atoms, namely, a methyl group or an ethyl group, and particularly preferably a hydrogen atom. Herein, R^{d} may have a substituent or no substituent, but it is preferable that R^{d} does not have a substituent. Examples of the substituent include those described above.

In Formula (5'), X represents a divalent organic group. The divalent organic group is preferably an alkylene group having 2 to 20 carbon atoms. The alkylene group is preferably -(CᵢH₂ᵢ)- or -(CᵢH₂ᵢ₋₂)-, in which i represents an integer of from 2 to 20. The alkylene group may have a straight chain structure, a branched structure, or a cyclic structure. Further, the alkylene group may contain an ether bond, an ester bond, an amide bond, a urethane bond, or an arylene group. In a case in which X represents an alkylene group, the alkylene group preferably has from 2 to 20 carbon atoms, even more preferably from 2 to 12 carbon atoms, and more preferably from 2 to 8 carbon atoms.

In Formula (5'), it is preferable that R^{a} and R^{b} each independently represent an alkyl group having 1 or 2 carbon atoms, R^{c} represents a methyl group, Z represents -COO-, X represents -(CᵢH₂ᵢ)- or -(CᵢH₂ᵢ₋₂)-, and i represents an integer of from 2 to 12.

In a case in which the compound (b-2) is a polymer including the structure represented by Formula (5') above, the polymer is preferably a polymer obtained by polymerization using a monomer represented by Formula (5'-1) described below. The polymer may be a polymer obtained by polymerization using the monomer represented by Formula (5'-1) alone, or may be a polymer obtained by copolymerization using the monomer represented by Formula (5'-1) together with other monomer capable of copolymerization. From the viewpoint of controlling the film properties after the ink composition has been cured, the polymer is preferably a copolymerization product.

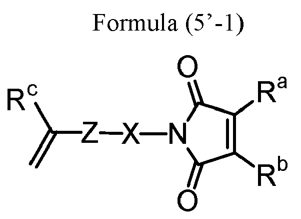

(In Formula (5'-1), R^{a} and R^{b} each independently represent a hydrogen atom or an alkyl group having 1 to 4 carbon atoms, and R^{a} and R^{b} may bond each other to form a 4- to 6-membered ring. R^{c} represents a hydrogen atom or a methyl group. Z represents -COO- or -CONR^{d} -, and R^{d} represents a hydrogen atom or an alkyl group having 1 to 4 carbon atoms. X represents a divalent organic group.)

R^{a}, R^{b}, R^{c}, Z and X in Formula (5'-1) have the same definitions as in Formula (5'), respectively, and so are the preferable examples.

Preferable examples of the monomer represented by Formula (5'-1) include the following examples. However, the invention is not limited to these examples.

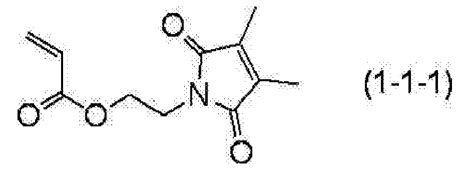

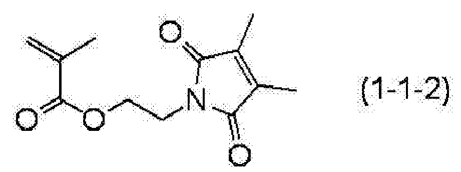

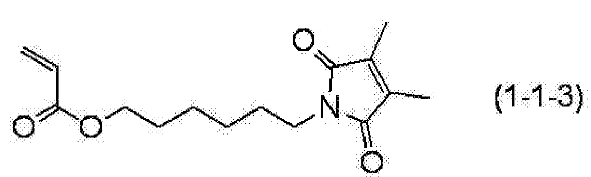

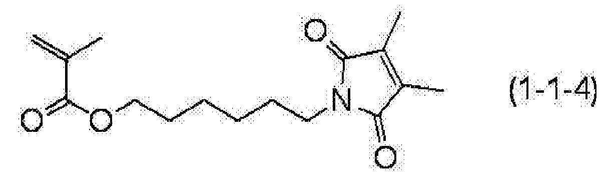

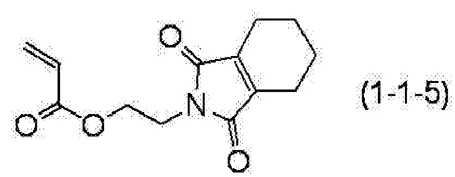

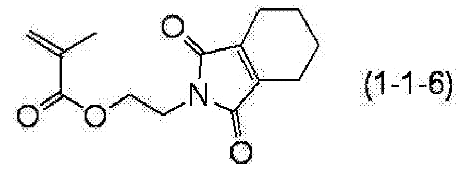

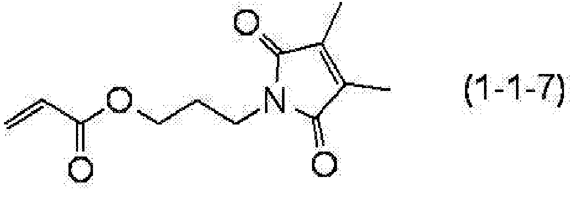

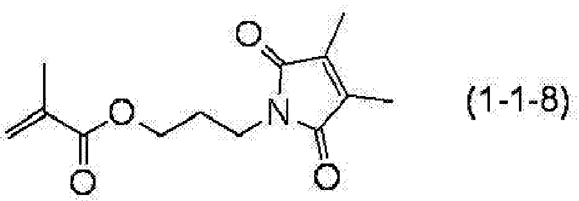

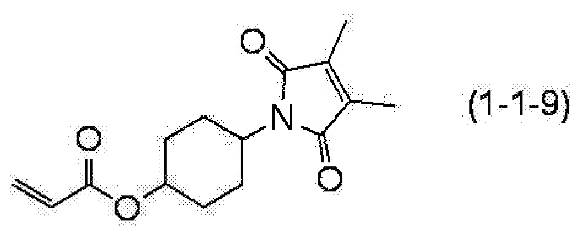

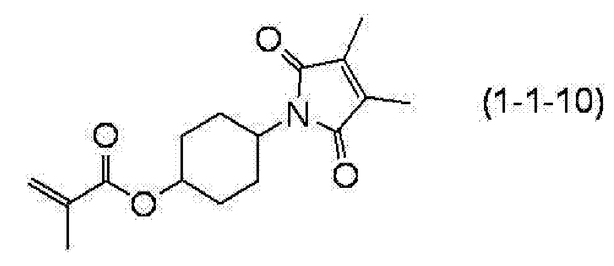

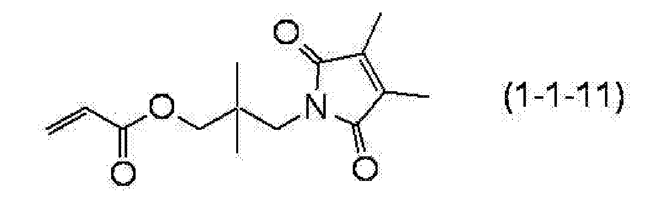

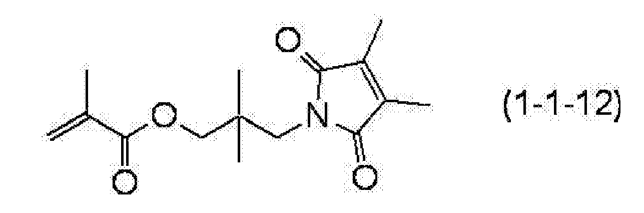

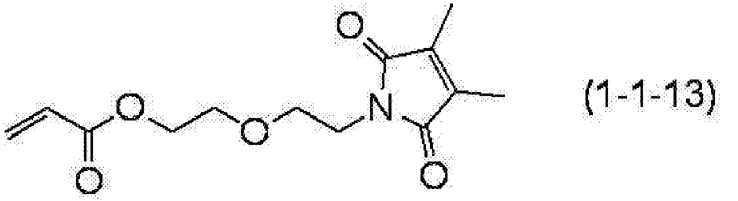

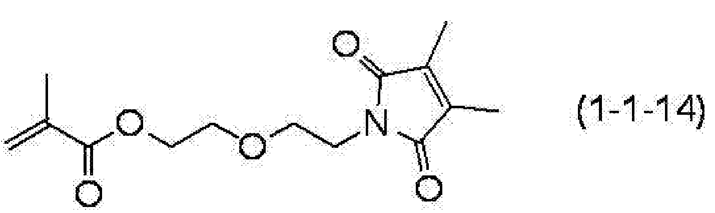

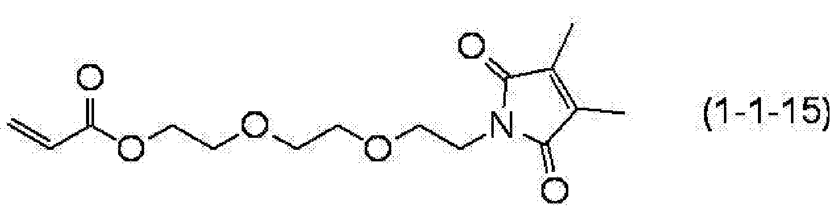

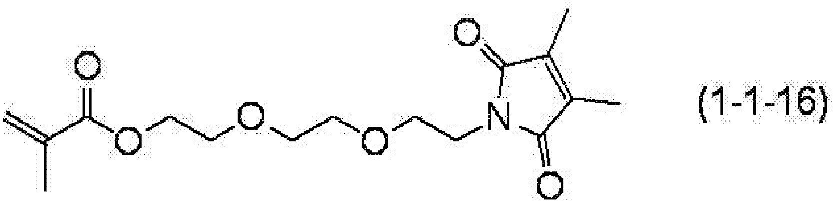

Examples of monomers copolymerizable with the monomer represented by Formula (5'-1) include styrene, p-methoxy styrene, methyl (meth)acrylate, ethyl (meth)acrylate, allyl (meth)acrylate, butyl (meth)acrylate, hexyl (meth)acrylate, 2-ethylhexyl (meth)acrylate, octyl (meth)acrylate, decyl (meth)acrylate, stearyl (meth)acrylate, cyclohexyl (meth)acrylate, bornyl (meth)acrylate, isobornyl (meth)acrylate, benzyl (meth)acrylate, 2-ethylhexyl diglycol (meth)acrylate, butoxyethyl (meth)acrylate, butoxymethyl (meth)acrylate, 3-methoxybutyl (meth)acrylate, 2-(2-methoxyethoxy)ethyl (meth)acrylate, 2-(2-butoxyethoxy)ethyl (meth)acrylate, 2,2,2-tetrafluoroethyl (meth)acrylate, 1H,1H,2H,2H-perfluorodecyl (meth)acrylate, 4-butylphenyl (meth)acrylate, phenyl (meth)acrylate, 2,4,5-tetramethylphenyl (meth)acrylate, 4-chlorophenyl (meth)acrylate, phenoxymethyl (meth)acrylate, phenoxyethyl (meth)acrylate, glycidyl (meth)acrylate, glycidyloxybutyl (meth)acrylate, glycidyloxyethyl (meth)acrylate, glycidyloxypropyl (meth)acrylate, tetrahydrofurfuryl (meth)acrylate, 2-hydroxyethyl (meth)acrylate, 3-hydroxypropyl (meth)acrylate, 2-hydroxypropyl (meth)acrylate, 2-hydroxybutyl (meth)acrylate, 4-hydroxybutyl (meth)acrylate, 2-methacryloyloxyethylsuccinic acid, 2-methacryloyloxyethylhexahydrophthalic acid, 2-methacryloyloxyethyl 2-hydroxypropyl phthalate, butoxy diethylene glycol (meth)acrylate, trifluoroethyl (meth)acrylate, perfluorooctylethyl (meth)acrylate, 2-hydroxy-3-phenoxypropyl (meth)acrylate, (meth)acrylamide, N-butyl(meth)acrylamide, N-p-hydroxyphenyl(meth)acrylamide, p-sulfamoylphenyl(meth)acrylamide, and the like.
As the monomer copolymerizable with the monomer represented by Formula (5'-1), alkyl (meth)acrylates in which an alkyl group has 1 to 8 carbon atoms such as methyl (meth)acrylate, ethyl (meth)acrylate, butyl (meth)acrylate, hexyl (meth)acrylate, 2-ethylhexyl (meth)acrylate, and the like, are preferable. Further, monomers other than monomers described above may be used as the monomer copolymerizable with the monomer represented by Formula (5'-1) as necessary.

In a case in which the compound (b-2) is a copolymer, it is preferable that the compound (b-2) has a structure represented by the following Formula (A').

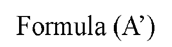

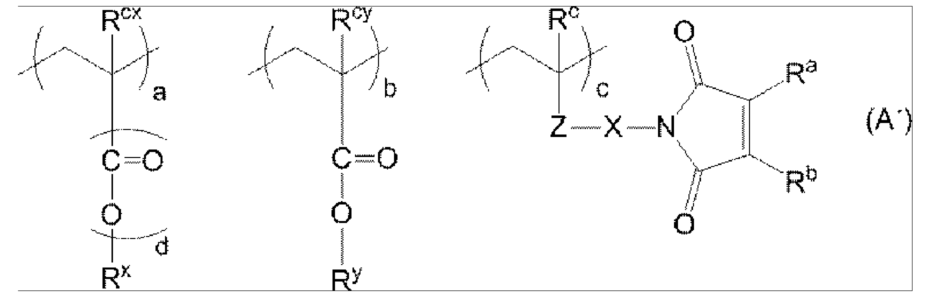

(In Formula (A'), R^{a} and R^{b} each independently represent an alkyl group having 1 to 4 carbon atoms, and R^{a} and R^{b} may bond each other to form a 4- to 6-membered ring. R^{c}, R^{cx}, and R^{cy} each independently represent a hydrogen atom or a methyl group. R^{x} and R^{y} each independently represent an alkyl group having 1 to 10 carbon atoms or an aryl group having 6 to 20 carbon atoms. Z represents -COO- or -CONR^{d} -, and R^{d} represents a hydrogen atom or an alkyl group having 1 to 4 carbon atoms. X represents a divalent organic group a, b, and c represent a copolymerization ratio in the polymer, and the sum of a, b, and c is 100. d represents 0 or 1.)

R^{a}, R^{b}, R^{c}, Z and X in Formula (A') have the same definitions as in Formula (5'), respectively, and so are the preferable examples.

In Formula (A'), R^{cx} and R^{cy} each independently represent a hydrogen atom or a methyl group. It is preferred that both R^{cx} and R^{cy} represent a methyl group.

In Formula (A'), R^{x} and R^{y} each independently represent an alkyl group having 1 to 10 carbon atoms or an aryl group having 6 to 20 carbon atoms. These groups may have a substituent or no substituent. Further, these groups may have a straight chain structure or a branched structure. These groups may form a salt, if necessary. Specifically, R^{x} and R^{y} each represent a methyl group, an ethyl group, a propyl group, an isopropyl group, a butyl group, an isobutyl group, a sec-butyl group, a t-butyl group, a pentyl group, a hexyl group, an octyl group, a phenyl group, a naphthyl group, or the like. R^{x} and R^{y} preferably represent an alkyl group having 1 to 8 carbon atoms, and most preferably an alkyl group having 1 to 6 carbon atoms.

These groups may have a substituent. As the substituent, an alkyl group having 1 to 8 carbon atoms, an aryl group having 6 to 20 carbon atoms, an alkoxy group having 1 to 8 carbon atoms, a hydroxyl group, a carboxyl group, a halogen atom, an alkyloxycarbonyl group having 2 to 7 carbon atoms, an alkylcarbonyloxy group having 2 to 7 carbon atoms, an aryloxycarbonyl group having 7 to 11 carbon atoms, an arylcarbonyloxy group having 7 to 11 carbon atoms, an alkylcarbamoyl group having 1 to 7 carbon atoms, an arylcarbamoyl group having 7 to 11 carbon atoms, and the like are preferable, and an alkyl group having 1 to 4 carbon atoms, an alkoxy group having 1 to 4 carbon atoms, a hydroxyl group, a carboxyl group, and a halogen atom are more preferable. In a case in which at least one of R^{x} or R^{y} has a substituent as described above and the substituent includes carbon, the number of carbon atoms of the substituent is not included in the number of carbon atoms of the alkyl group having 1 to 10 carbon atoms described in the above R^{x} and R^{y}.

In Formula (A'), a, b, and c represent a copolymerization ratio in the polymer, and the sum of a, b, and c is 100. It is preferable that a, b, and c satisfy 30 ≤ a + b ≤ 90 and 10 ≤ c ≤ 70, and it is more preferable that a, b, and c satisfy 40 ≤ a + b ≤ 90 and 10 ≤ c ≤ 60.

In Formula (A'), d represents 0 or 1, and preferably represents 1.

Examples of the compound (b-2) include the following compounds. However, the present application is not limited to these compounds.

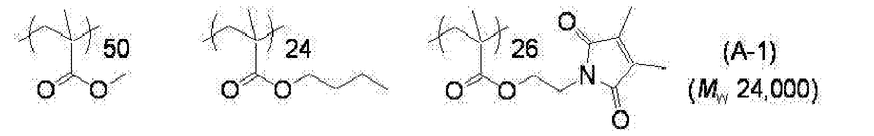

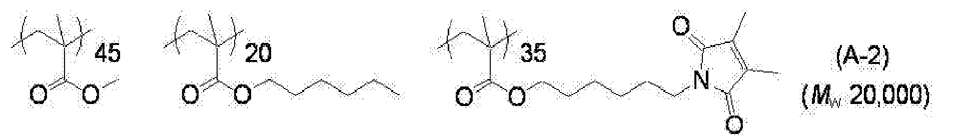

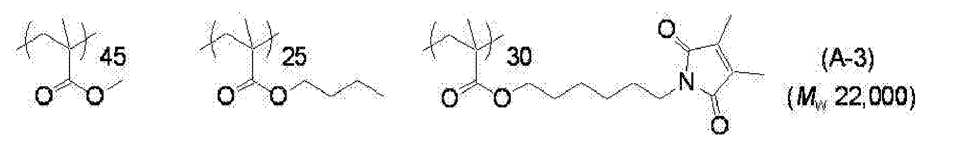

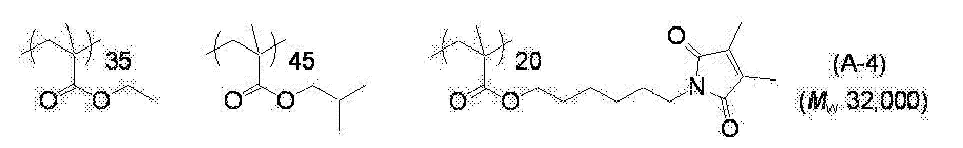

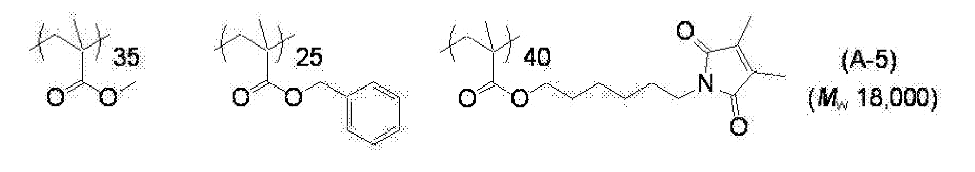

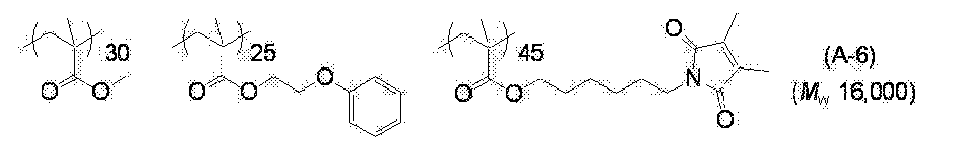

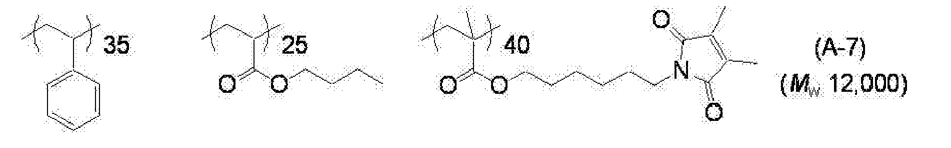

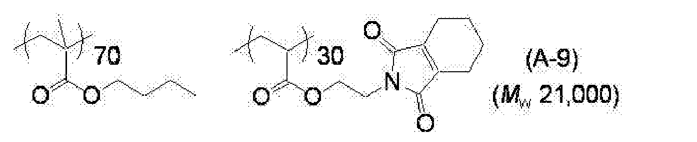

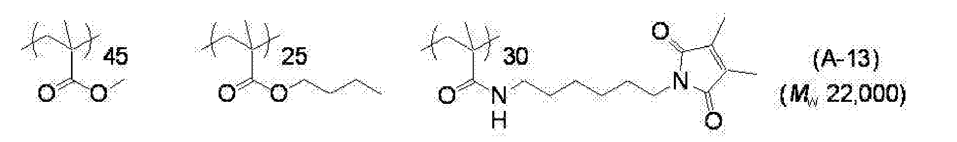

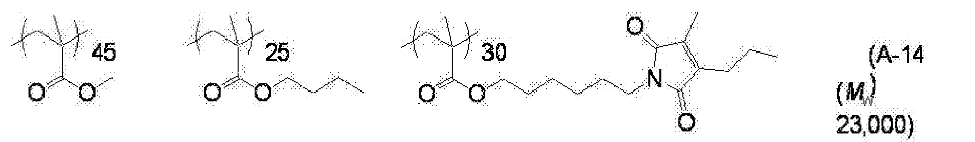

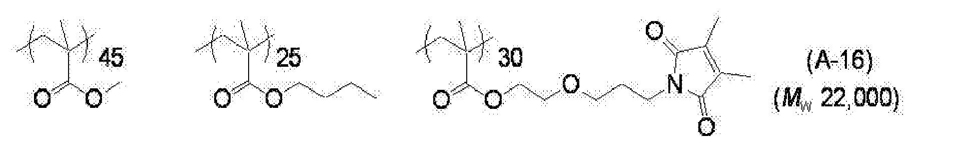

In the present invention, (A-1) to (A-6) can be used preferably as the compound (b-2), and (A-2) to (A-4) are particularly preferable.

The compound (b-2) in the invention and a precursor thereof may be produced by a conventionally known method. For example, the low molecular weight compounds such as those represented by chemical formulae (1-1) to (1-12) may be produced according to the methods described in U.S. Patent Application Publication No. US2009/0224203A1, Synlett, vol. 13, pages 2172 to 2176 (2009), Journal of Polymer Science Part A-1 Polymer Chemistry, vol. 10 (6), pages 1687 to 1699 (1972); and the like. Acrylates which may become precursors of the polymers such as those represented by chemical formulae (1-1-1) to (1-1-16) may be produced according to the methods described in JP-A Nos. 52-988 and 4-251258, and the like. The polymers represented by chemical formulae (A-1) to (A-16) can be obtained by polymerization using the above precursors according to a known polymerization method, for example, by a method based on the polymerization methods described in JP-A Nos. 52-988 and 55-154970, Langmuir, vol. 18 (14), pages 5414 to 5421 (2002), and the like.

A content of the compound (b-2) in the ink composition for inkjet recording is preferably from 1% by mass to 50% by mass, more preferably from 2% by mass to 35% by mass, and even more preferably from 5% by mass to 30% by mass. When the content of the compound (b-2) is 1% by mass or more, satisfactory physical properties of cured film may be obtained, and when the content of the compound (b-2) is 50% by mass or less, the ink viscosity may be suitably maintained.
In particular, since the ink composition of the invention contains at least two types of maleimide compounds (b), and at least one of the maleimide compounds (b) is a polymer (b-1) having at least one group selected from the group consisting of an amino group, a carboxyl group, and a phosphoric acid group, the ink composition exhibits excellent storage stability and curability (especially, curability at the time of formation of a thin film). This mechanism is not clear but is guessed as follows. Regarding the polymer (b-1) among the plural maleimide compounds contained in the ink composition, since the amino group, the carboxyl group, or the phosphoric acid group possessed by the polymer functions as an excellent adsorptive group to the pigment and effectively adsorbs to the pigment, the polymer (b-1) effectively works as a pigment dispersant, and prevents deterioration in ink storage stability caused by aggregation of the pigment. Further, the maleimido groups possessed by the polymer demonstrate the properties of crosslinking and curing, by a photo-dimerization reaction that proceeds due to irradiation of an actinic energy ray, and besides that, since the polymer has a large number of maleimido groups as the repeating unit, the crosslinkage density is increased and the curability is improved. Moreover, since the compound (b-2), which is a maleimido compound of another type, does not practically adsorbs to the pigment and exists in a state of being uniformly dissolved in the ink composition, the compound (b-2) demonstrates the photo-dimerization reaction (curability) of the maleimido groups synergistically, together with the polymer (b-1). It is guessed that, especially, the photo-dimerization reaction of the maleimido groups is less likely to be affected by the reaction inhibition due to oxygen, as compared with the case of curing by conventional radical polymerization, and thus, the curability in a thin film system in which the curing inhibition due to the supply of oxygen is remarkably demonstrated can be improved. It should be noted that the above mechanism is only a guess, and the invention is not limited to the presumed mechanism.

### <Polymerizable compound>

The ink composition of the invention contains a polymerizable compound, other than the polymer (b-1) and the compound (b-2). When the ink composition of the invention contains the polymerizable compound and the compound (b-2), an image having satisfactory ink curability can be formed.

The polymerizable compound used in the ink composition of the invention is not particularly limited as long as the compound causes a polymerization reaction and cures by application of some kind of energy. Particularly, it is preferable that the ink composition of the invention contains a radical-polymerizable monomer that causes a polymerization reaction by initiating species generated from a polymerization initiator to be added as desired.
A preferable example of the radical-polymerizable monomer is a compound having an ethylenically unsaturated bond capable of radical polymerization. More specifically, a preferable example of the radical-polymerizable monomer is a monomer having at least one ethylenically unsaturated bond capable of radical polymerization in a molecule thereof.

Examples of monomers having an ethylenically unsaturated bond capable of radical polymerization include unsaturated carboxylic acids such as acrylic acid, methacrylic acid, itaconic acid, crotonic acid, isocrotonic acid, maleic acid, and the like; unsaturated carboxylic acid esters; salts of unsaturated carboxylic acids; acid anhydrides having at least one ethylenically unsaturated bond; acrylonitril; styrene; and the like. Further, many kinds of macromers such as unsaturated polyester, unsaturated polyether, unsaturated polyamide, unsaturated polyurethane, and the like are exemplified.
Specifically, the radical-polymerizable monomer includes a monofunctional radical-polymerizable monomer and a polyfunctional radical-polymerizable monomer. Preferable examples of the monofunctional monomer include (meth)acrylates having oxygen atom of cyclic ether such as tetrahydrofurfuryl (meth)acrylate, cyclic trimethylolpropane formal (meth)acrylate and the like; (meth)acrylate having an aromatic ring group such as 2-hydroxy-3-phenoxypropyl (meth)acrylate, 2-phenoxyethyl (meth)acrylate, and the like; (meth)acrylates having a bicycloalkyl or tricycloalkyl group such as isobornyl (meth)acrylate, dicyclopentenyloxyethyl (meth)acrylate, and the like; (meth)acrylates having straight chain alkyl group containing ether group such as 2-(2-ethoxyethoxy)ethyl (meth)acrylate, methoxyethylene glycol mono(meth)acrylate, and the like; and the like. Further, N-vinylcaprolactam or the like are preferable as the monofunctional monomer.

Preferable examples of the polyfunctional monomer include tripropylene glycol di(meth)acrylate, neopentyl glycol di(meth)acrylate, PO-modified neopentyl glycol di(meth)acrylate, trimethylolpropane tri(meth)acrylate, PO-modified trimethylolpropane tri(meth)acrylate, neopentyl glycol hydroxypivalate di(meth)acrylate, EO-modified bisphenol-A di(meth)acrylate, and the like. Here, the abbreviation "PO" denotes a propylenoxy group, and the abbreviation "EO" denotes a ethylenoxy group Further, polyfunctional vinyl ethers such as triethylene glycol divinyl ether and the like are exemplified as the polyfunctional monomer.

Other examples include (meth)acrylate compounds, (meth)acrylamide compounds, vinyl ether compounds, styrene compounds, N-vinyl compounds, and the like described in, for example, JP-A Nos. 2008-208190 and 2008-266561.

The proportion of the polymerizable compound with respect to the ink composition of the invention is preferably from 50% by mass to 95% by mass with respect to the total mass of the ink composition, and more preferably from 60% by mass to 90% by mass, from the viewpoint of curability.

In the ink composition of the invention, a so-called polymerizable oligomer can be added as the polymerizable compound (c). The polymerizable oligomer is a compound that has at least one polymerizable functional group at a terminal of the oligomer and has a weight average molecular weight of from 400 to 10,000.

From the viewpoint of polymerizability, it is preferable that a (meth)acryloyl group, a vinyl ether group, or a styryl group is introduced, as the terminal polymerizable functional group of the polymerizable oligomer. Among them, an oligomer into which an acryloyl group is introduced is more preferable. It is preferable to use, as the polymerizable oligomer, at least one selected from the group consisting of a polyester oligomer, a urethane oligomer, a modified polyether oligomer, an acrylic oligomer, and an epoxy oligomer.

Examples of the polymerizable oligomers include CN9001, CN9002, CN902J75, CN961H81, CN963A80, CN963B80, CN963E75, CN964, CN964B85, CN965, CN968, CN981, CN982A75, CN983, CN984, CN9893, CN996, CN970A60, CN972, CN975, CN978, CN991, CN992, CN999, CN816, CN817, CN818, CN292, CN293, CN294, CN736, CN738, CN750, CN2100, CN2200, CN2101 (trade names; all manufactured by SARTOMER Co. Inc.), EBECRYL 230, EBECRYL 244, EBECRYL 245, EBECRYL 270, EBECRYL 284, EBECRYL 285, EBECRYL 4830, EBECRYL 4858, EBECRYL 8402, EBECRYL 8804, EBECRYL 8807, EBECRYL 8803, EBECRYL 8800, EBECRYL 254, EBECRYL 264, EBECRYL 1259, EBECRYL 1264, EBECRYL 9260, EBECRYL 8210, EBECRYL 5129, EBECRYL 1290, EBECRYL 210, EBECRYL 204, EBECRYL 220, EBECRYL 4450, EBECRYL 770, EBECRYL 81, EBECRYL 84, EBECRYL 83, EBECRYL 80, EBECRYL 657, EBECRYL 800, EBECRYL 810, EBECRYL 812, EBECRYL 1657, EBECRYL 450, EBECRYL 670, EBECRYL 830, EBECRYL 870, EBECRYL 2870, EBECRYL 1870, EBECRYL 745, EBECRYL 767, EBECRYL 1701, EBECRYL 1755 (trade names; all manufactured by DAICEL-CYTEC Co. Ltd.), LAROMER LR8765, LAROMER LR8986, LAROMER LR8987, LAROMER LR8739, LAROMER LR8983 (trade names; all manufactured by BASF Japan Ltd.), NK OLIGO EA-6310, NK OLIGO EA-1020, NK OLIGO EA-6320 (trade names; all manufactured by SHIN-NAKAMURA CHEMICAL Co. Ltd.) and the like.

A content of the polymerizable oligomer in the ink composition of the invention is preferably from 1% by mass to 15% by mass with respect to the mass of the ink composition, and more preferably from 1% by mass to 10% by mass.

### <Polymerization initiator>

The ink composition of the invention may contain a polymerization initiator. The polymerization initiator may be any of a thermal polymerization initiator or a photopolymerization initiator. When the ink composition contains a thermal polymerization initiator, the ink composition shows good curability by heating. Further, when the ink composition contains a photopolymerization initiator, the ink composition cures by irradiation with an actinic energy ray. For example, in a case in which an image is formed by using the ink composition of the invention, it is preferable to cure the ink composition instantly, in order to obtain a sharp image without bleeding. Therefore, in the ink composition of the invention, it is preferable to use a photopolymerization initiator as the polymerization initiator. Further, since the ink composition of the invention has satisfactory pigment dispersion stability, one of the features of the ink composition of the invention is that the storage stability in the presence of a photopolymerization initiator is good.

The "actinic energy ray" used herein is not particularly limited as long as it can impart energy capable of generating initiating species in an ink composition by its irradiation, and encompasses α ray, γ ray, X ray, ultraviolet ray, visible ray, electron beam, and the like. Among them, from the viewpoints of curing sensitivity and easy availability of an apparatus, ultraviolet ray and electron beam are preferable, and ultraviolet ray is more preferable. Therefore, the ink composition of the present invention is preferably an ink composition that can be cured by irradiation with an ultraviolet ray as the actinic energy ray. As the light source for generating ultraviolet ray, those having an emission wavelength between 300 nm to 400 nm are preferable. A known ultraviolet lamp such as a low-pressure mercury lamp, a high-pressure mercury lamp, a short arc discharge lamp, an ultraviolet ray emitting diode, a semiconductor laser, or a fluorescent lamp may be used. Depending on the quantity of light or wavelength suitable for the initiator, a high-pressure mercury lamp or metal halide lamp, which belongs to a high-pressure discharge lamp, or a xenon lamp which belongs to a short arc discharge lamp is used preferably. An ultraviolet ray emitting diode is also used preferably, from the viewpoint of energy conservation.

The ink composition of the invention preferably contains a polymerization initiator for radical polymerization, and more preferably contains a photopolymerization initiator.
Hereinafter, the photopolymerization initiator will be described in detail.

### <Photopolymerization initiator>

The ink composition of the invention may contain a photopolymerization initiator as described above.
The photopolymerization initiator is a compound causing chemical changes by the effect of light, or by way of interaction with an electron excited state of a sensitizing dye and forming at least one of radicals, acid, or base.

A photopolymerization initiator having a sensitivity to irradiated actinic ray, for example, UV-ray at the wavelength of from 200nm to 400 nm, FUV-ray, g-line, h-line, i-line, KrF excimer laser light, ArF excimer laser light, electron beam, X-ray, molecular beam or ion beam can be selected and used arbitrarily.

As the photopolymerization initiator, those known to a person skilled in the art can be used with no restriction and, for example, a number of initiators described in Chemical Revue, 93, 435 (1993), written by Bruce M. Monroe, et al, in Journal of Photochemistry and Biology A: Chemistry 73, 81 (1993), written by R. S. Davidson, in "Photoinitiated Polymerization-Theory and Applications": Rapra Review vol. 9, Report, Rapra Technology (1998), by J.P. Faussier; and in Prog, Polym. Sci., 21, 1 (1996), written by M. Tsunooka, et al. can be used. Further, compounds utilized for chemical amplification type photoresist or photocationic polymerization described in "Imaging Organic Material" (in English), edited by Organic Electronics Material Kenkyukai, from Bunshin Shuppan (1993) (refer to pages 187 to 192) can be used. Further, there are known compounds causing oxidative or reducing cleave of bonding by way of interaction with the electron excited state of a sensitizing dye as described, for example, in Topics in Current Chemistry, 156, 59 (1990), by F. D. Saeva, in Topics in Current Chemistry, 168, 1 (1993), by G G Maslak; in JACS, 112, 6329 (1999), by H. B. Shuster, et al; and in JACS, 102, 3298 (1980) by I. D. F. Eaton et al.

As the photopolymerization initiator, (i) aromatic ketones, (ii) aromatic onium salt compounds, (iii) organic peroxides, (iv) hexaryl biimidazole compounds, (v) ketoxime ester compounds, (vi) borate compounds, (vii) azinium compounds, (viii) metallocene compounds, (ix) active ester compounds, (x) compounds having carbon-halogen bonds are preferable.
Examples thereof may include photopolymerization initiators described in paragraphs 0147 to 0225 of the specification ofJP-ANo. 2010-13630.

The photopolymerization initiator as a polymerization initiator may be used alone or in combination with two or more kinds thereof. A content of the photopolymerization initiator in the ink composition is preferably in a range of from 0.1% by mass to 20% by mass, and more preferably in a range of from 0.5% by mass to 15% by mass.

The ink composition in the present invention may contain an initiator or the like other than essential component(s) for the ink composition, and further, may contain other additives such as a sensitizing dye, a cosensitizer or the like, as necessary. As the sensitizing dye, a sensitizing dye described, for example, in the paragraphs [0228] to [0237] of JP-A No. 2010-13630 may be preferably used. Examples of the cosensitizer include a cosensitizer described, for example, in the paragraphs [0238] to [0240] of JP-A No. 2010-13630.

### <Polymerization inhibitor>

A polymerization inhibitor can be added to the ink composition of the invention, in order to prevent viscosity increase due to polymerization during storage or ejection failure. Preferable examples of the polymerization inhibitor include compounds selected from the group consisting of phenol type hydroxyl group-containing compounds, quinones, N-oxide compounds, piperidine-1-oxyl free radical compounds, pyrrolidine-1-oxyl free radical compounds, N-nitrosophenylhydroxylamines, and cation dyes.

Specific examples of the polymerization inhibitor include hydroquinone, p-methoxyphenol, di-t-butyl-p-cresol, pyrogallol, resorcinol, catechol, t-butylcatechol, hydroquinone monoalkyl ether (for example, hydroquinone monomethyl ether, hydroquinone monobutyl ether, or the like), benzoquinone, 4,4-thiobis(3-methyl-6-t-butylphenol), 2,2'-methylenebis(4-methyl-6-t-butylphenol), 2,2,6,6,-tetramethylpiperidine and derivatives thereof, di-t-butyl nitroxide, 2,2,6,6,-tetramethylpiperidine-N-oxide and derivatives thereof, piperidine 1-oxyl free radical, 2,2,6,6,-tetramethylpiperidine 1-oxyl free radical, 4-oxo-2,2,6,6,-tetramethylpiperidine 1-oxyl free radical,
4-hydroxy-2,2,6,6,-tetramethylpiperidine 1-oxyl free radical,
4-acetoamido-2,2,6,6,-tetramethylpiperidine 1-oxyl free radical,
4-maleimido-2,2,6,6,-tetramethylpiperidine 1-oxyl free radical,
4-phosphonoxy-2,2,6,6,-tetramethylpiperidine 1-oxyl free radical,
3-carboxy-2,2,5,5-tetramethylpyrrolidine 1-oxyl free radical, N-nitrosophenylhydroxylamine cerium(III) salt, N-nitrosophenylhydroxylamine aluminum salt, crystal violet, methyl violet, ethyl violet, and Victoria Pure Blue BOH.

Among the above compounds, hydroquinone monoalkyl ethers, such as hydroquinone monomethyl ether or hydroquinone monobutyl ether, and hindered phenols, such as 4,4-thiobis(3-methyl-6-t-butylphenol) or 2,2'-methylenebis(4-methyl-6-t-butylphenol), are preferable.

A content of the polymerization inhibitor in the ink composition is preferably from 1,000 ppm to 20,000 ppm, more preferably from 2,000 ppm to 17,000 ppm, and even more preferably from 4,000 ppm to 15,000 ppm, with respect to the total mass of the ink composition.

### <Other component>

Various organic type and metal complex type discoloration inhibitors; conductive salts, which are aimed to control physical property of an ejected product, such as potassium thiocyanate, lithium nitrate, ammonium thiocyanate, and dimethylamine hydrochloride; and the like can be added in the ink composition of the invention, as necessary.

For the ink composition of the invention, various types of polymer compounds can be added with an aim of controlling the film property. As the polymer compound, acrylic polymer, polyvinylbutyral resin, polyurethane resin, polyamide resin, polyester resin, epoxy resin, phenol resin, polycarbonate resin, polyvinyl butyral resin, polyvinyl formal resin, shellac, vinyl resin, acrylic resin, rubber resin, waxes and other natural resins can be used. Further, two or more of them may be used in combination.
For the ink composition of the invention, nonionic surfactant, cationic surfactant, organic fluoro compound, etc. can also be added for controlling the liquid property.
Further, in addition, a leveling additive, a matting agent, waxes for controlling the film property may be used. Further, a tackifier or the like, which does not inhibit polymerization, for improving adhesion to a recording medium such as polyolefin or PET may be used.

Further, other than the above, for example, a ultraviolet absorbing agent can also be added from viewpoints of improving resistance of an image to climate and preventing color fading of an image, Further, an antioxidant can also be added for improving stability of the ink composition.

### <Organic solvent>

The ink composition of the invention may contain an organic solvent within a range not impairing the curability. The organic solvent to be used may be selected as appropriate depending on the purpose. For example, a known alcohol solvent, ester solvent, ether solvent, hydrocarbon solvent, ketone solvent, or the like is preferably used. Specifically, alkylene oxide monoalkyl ether, alkylene oxide monoalkyl ether acetate, alkylene glycol diacetate, dicarboxylic acid dialkyl ester, cyclohexanone, ethyl lactate, and the like are preferable. Further, the ink composition of the invention is preferably a nonaqueous ink composition which does not substantially contain water, from the viewpoints of bleeding and curability. More specifically, it is preferable that the content of water is 3% by mass or lower, and it is more preferable that the content of water is 0% by mass. It is effective to prepare a nonaqueous ink in view of dispersion stability of the pigment.

### Ink composition for inkjet

One of preferable exemplary embodiments of the ink composition of the present invention is an ink composition for inkj et recording. In a case of using the ink composition of the invention in an inkjet recording method, ink viscosity is preferably 30 mPa·s or less at the temperature of injection, and more preferably 25 mPa·s or less at the temperature of injection from the viewpoint of dischargeability. Accordingly, the compositional ratio is preferably controlled and decided so that the viscosity becomes within the range described above.
In addition, the ink viscosity at 25°C (room temperature) is in the range of from 0.5 mPa·s to 200 mPa·s, preferably from 1 mPa·s to 100 mPa·s, and more preferably from 2 mPa·s to 50 mPa·s. When the viscosity at the room temperature is set high, even in a case of using a porous recording medium, penetration of the ink into the recording medium can be prevented, which results in reduction of uncured monomers especially in a case of using a curable ink composition as well as reduction of odor and, further, dot bleeding at the time of spotting ink droplets can be suppressed and, as a result, image quality can be improved. When the ink viscosity at 25°C is higher than 200 mPa·s, this causes a problem in delivery of the ink liquid. The ink viscosity may be measured by using E-type viscometer (manufactured by TOKI SANGYO Co., Ltd.).

The surface tension of the ink composition of the invention when used for inkjet is in the range of preferably from 20 mN/m to 40 mN/m, and more preferably from 23 mN/m to 3 5 mN/m. In a case of recording to various recording media such as polyolefin, PET, coat paper or non-coat paper, it is preferably 20 mN/m or more from the viewpoints of bleeding and penetration, and preferably 35 mN/m or less from the viewpoint of wettability.

The ink composition prepared as described above is favorably used as an ink for inkjet recording. Recording is performed by printing the ink composition on a recording medium by an inkjet printer, and then irradiating radiation rays to the printed ink composition thereby curing the same in a case of using a curable ink composition.

The ink composition of the present invention may be used in other application than the image formation by the ink. The ink composition may be particularly used for, for example, formation of an ink receiving layer (image portion) of a planographic printing plate, since the ink composition containing the pigment dispersion of the invention is cured by irradiation of radiation rays such as UV-rays and thereby a cured film of high strength is obtained.

Then, an inkjet recording method and an inkjet recording apparatus, that can be used in a case of applying the ink composition of the invention to the ink composition for inkj et, are described below.

### Inkjet recording method

In the recording method by the inkjet printer, it is preferred to inject the ink composition after controlling it to a temperature range of from 25°C to 80°C thereby setting the viscosity of the ink composition to 30 mPa · s or lower, and high injection stability can be attained by using the method.
Generally, in a water-insoluble ink composition, since the viscosity is generally higher than that of an aqueous ink, the range of viscosity fluctuation due to the fluctuation of temperature during printing is large. Since the fluctuation of the viscosity of the ink composition directly and significantly affects the droplet size and the droplet injection speed, thereby bringing about a degradation of image quality, it is necessary that the temperature of the ink composition during printing is maintained constant as much as possible. A control range for the temperature of the ink composition is preferably a set temperature ±5°C, more preferably a set temperature ±2°C, and even more preferably a set temperature ±1°C.

One of the features of the inkj et recording apparatus used for the inkj et recording method is the provision of a stabilizing unit for stabilizing a temperature of the ink composition, and therefore all of pipeline systems and involved components ranging from an ink tank (an intermediate tank if it is provided) to a nozzle injection surface are considered as targets to be controlled to a predetermined temperature.

While a method of controlling the temperature is not particularly restricted, it is preferred to provide, for example, a plurality of temperature sensors to each of pipeline portions thereby controlling heating in accordance with a flow rate of the ink composition and the environmental temperature. Further, a head unit to be heated is preferably shield thermally or heat-insulated such that the apparatus main body is not affected by a temperature of ambient air. In order to shorten a rising time of the printer that is required for heating, or in order to reduce a loss of heat energy, it is preferred to thermally insulate the heating unit from other portions and to reduce an entire heat capacity of the unit.

The ink composition of the present invention may be a curable ink composition by irradiation of actinic radiation rays since the ink composition contains a polymerizable compound (c).
Conditions for irradiating the actinic radiation rays in the ink composition are described below. A basic irradiation method is disclosed in JP-ANo. 60-132767. Specifically, light sources are disposed on both sides of the head unit, and the head and the light source are scanned by a shuttle system. Irradiation is performed at a predetermined time after spotting ink. Further, curing is completed by a separate light source with no driving. As an irradiation method, WO99/54415 discloses a method of using an optical fiber or a method of irradiating a UV light to a recording portion by hitting a collimated light source to a mirror surface disposed on the lateral side of the head unit. In the invention, any of these irradiation methods described above can be used.

Further, in a case of using the ink composition of the invention, it is preferred to heat the ink composition to a preset temperature and to set the time from spotting of the ink droplets to irradiation within the period of from 0.01 to 0.5 sec, and radiation rays are irradiated preferably in the period of from 0.01 to 0.3 sec., and more preferably in the period of from 0.01 to 0.15 sec. To control the period ranging from spotting of the ink droplets to irradiation to an extremely short time as described above enables to prevent the spotted ink droplet from bleeding before curing.
Further, since even a porous recording medium can be also exposed before the ink composition penetrates up to a depth of the porous medium to which exposure light can not reach, residue of unreacted monomer can be suppressed and, as a result, odors can be decreased.
By adopting the inkjet recording method described above, the dot diameter of the impacted ink can be kept constant for various recording media of different wettability at the surface thereof, and resultantly the image quality is improved. For obtaining color images, it is preferred to overlay an ink on another ink in order of brightness from lowest to highest. When inks of lower brightness are overlaid on ink of higher brightness, radiation rays less reach the lower portion, which tends to cause inhibition of curing sensitivity, increase of a residual monomer, generation of odors and deteriorate of adhesion. Further, upon irradiation, while it is possible to conduct exposure collectively after injecting inks of full colors, exposure to each one color is preferred from a viewpoint of promoting curing.

The inkjet recording apparatus used in the invention has no particular restriction and commercial inkj et recording apparatus can be used. That is, in the invention, a printed matter can be formed by image forming onto a recording medium by using a commercial inkj et recording apparatus.
According to the preferred injection conditions described above, while the ink composition of the invention is subjected to repetitive temperature rising and temperature falling, the ink composition of the invention has advantages capable of suppressing the lowering of the pigment dispersibility, obtaining an excellent color forming property over a long time, and also suppressing the lowering of the dischargeability caused by aggregation of the pigment, even in a case of storage under such temperature conditions.

### Recording medium

A recording medium to which the ink composition of the invention is applicable has no particular restriction and includes paper such as usual non-coat paper or coat paper, various non-absorptive resin materials used for so-called soft package, or a resin film formed by molding the material into a film shape. Various kinds of plastic films include, for example, a PET film, an OPS (biaxial oriented polystyrene) film, an OPP (biaxial oriented polypropylene) film, a ONy (biaxial oriented polyamide) film, a PVC (poly vinyl chloride) film, a PE film, and a TAC (cellulose triacetate) film. In addition, plastics usable as the recording material include, for example, polycarbonate, acrylic resin, ABS, polyacetal, PVA and rubbers. Further, metals and glass materials can also be used as a recording medium.

### Printed matter

A printed matter in the invention includes the recording medium described above and an image formed on the recording medium by using the ink composition. The printed matter can be obtained, for example, by printing the ink composition of the invention to a recording medium by an inkjet printer and then preferably curing the same by irradiating an actinic energy or applying heating to the printed ink composition. In the printed matter prepared from the ink composition of the invention, since the ink used for forming images contains fine pigment particles uniformly and in a stably dispersed state, the printed matter has high-quality images excellent in the color forming property and the sharpness and further has excellent resistance to climate of the images. Accordingly, the printed matter can be applied over an extensive region.

### EXAMPLES

Hereinafter the present invention is further specifically described by way of Examples, but the invention should not be restricted to the following embodiment of the examples. Unless otherwise mentioned, the "part" and "%" mean "part by mass" and "% by mass" respectively.

Polymers P-1 to P-7 and comparative polymers 1 and 2 used are shown in Table 1. In the table, S-1 was synthesized based on JP-A No. 52-988, and ARONIX TO-1429 (trade name, manufactured by Toagosei Co., Ltd.) was used for S-8. M-4, M-17, the polymers P-1 to P-7, and the comparative polymers 1 and 2 were synthesized based on JP-A No. 2010-13630.
In the table, tBuAEMA represents tert-butylaminoethyl methacrylate (manufactured by Aldrich); SA represents methacryloyloxyethyl succinate (trade name: NK ESTER SA, manufactured by Shin-Nakamura Chemical Co., Ltd.); P-1M represents methacryloyloxyethyl acid phosphate (trade name: LITE ESTER P-1M, manufactured by Kyoeisha Chemical Co., Ltd.); and N-1 represents methacryloylated poly(methyl methacrylate) (trade name: AA-6, manufactured by Toagosei Co., Ltd.).

**TABLE 1**

| Pigment dispersant | Maleimide Component of Formula(1) | | Monomer Component of Formula(1a) having amino group or the like | | | Component of Formula(2) | | Polymerizable Oligomer | | Mw |
|---|---|---|---|---|---|---|---|---|---|---|
| | Compound | Content (%) | Compound | Functional group | Content (%) | Compound | Content (%) | Compound | Content (%) | |
| (b-1) polymer P-1 | S-1 | 10.0 | tBuAEMA | amino group | 10.0 | - | - | N-1 | 80.0 | 140000 |
| (b-1) polymer P-2 | S-1 | 15.0 | tBuAEMA | amino group | 10.0 | M-4 | 10.0 | N-1 | 65.0 | 98000 |
| (b-1) polymer P-3 | S-1 | 25.0 | tBuAEMA | amino group | 10.0 | M-4 | 10.0 | N-1 | 55.0 | 87000 |
| (b-1) polymer P-4 | S-1 | 5.0 | tBuAEMA | amino group | 10.0 | M-4 | 10.0 | N-1 | 75.0 | 16000 |
| (b-1) polymer P-5 | S-1 | 10.0 | tBuAEMA | amino group | 10.0 | M-17 | 10.0 | N-1 | 70.0 | 73000 |
| (b-1) polymer P-6 | S-8 | 10.0 | SA | carboxyl group | 10.0 | M-4 | 5.0 | N-1 | 75.0 | 43000 |
| (b-1) polymer P-7 | S-8 | 10.0 | P-1M | phosphoric acid group | 5.0 | M-4 | 5.0 | N-1 | 80.0 | 52000 |
| Comparative polymer 1 | - | - | tBuAEMA | amino group | 10.0 | - | - | N-1 | 90.0 | 63000 |
| Comparative polymer 2 | - | - | SA | carboxyl group | 10.0 | - | - | N-1 | 90.0 | 38000 |

| | | | | | | | | | | |
|---|---|---|---|---|---|---|---|---|---|---|
| In Table 1, the abbreviation "Mw" denotes "a weight average molecular weight". | | | | | | | | | | |

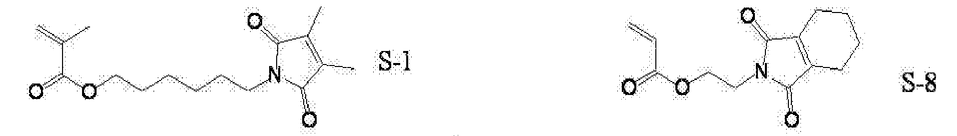

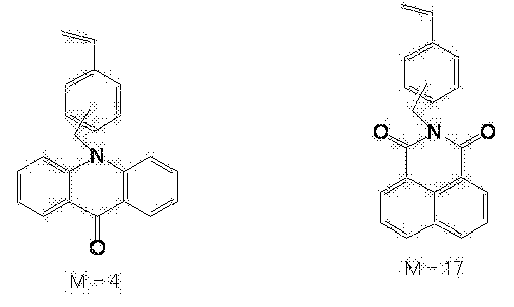

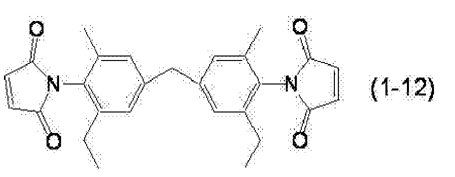

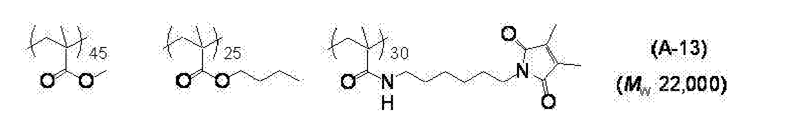

### [Example 1]

### - Preparation of Yellow Ink 1-

In a 200 mL beaker, 8.0 g of the polymer (b-1), P-1, was dissolved in 72.0 g of a polymerizable compound (c) (phenoxyethyl acrylate (PEA); trade name: AMP-10G, manufactured by Sin-Nakamura Chemical Co., Ltd.). Further, a pigment (a) (a benzimidazolone type yellow pigment PY-120; trade name: NOVOPERM YELLOW H2G, manufactured by Clariant) in an amount of 20 g was added thereto and mixed for 1 hour using a magnetic stirrer to perform preliminary dispersion. The obtained dispersion liquid was dispersed for 2.0 hours using a bead mill (trade name: MOTOR MILL M50, manufactured by Eiger; beads: zirconia beads, diameter of 0.65 mm) at a peripheral speed of 9.0 m/s, to obtain a mill base. Then, to the obtained pigment dispersion (mill base), the compound (b-2), the polymerizable compound (c), photopolmerization initiator, polymerization inhibitor described in Table 2 were added and mixed by stirring, and then the mixture was subjected to pressure filtration using a membrane filter, thereby preparing ink 1 of Example 1.

### [Examples 2 to 8, and Comparative Examples 1 and 2]

**TABLE 2**

| | | Mill base | | | | | (b-2)Compound | | Added polymerizable compound | | Photo-polymerization Initiator | Polymerization Inhibitor | | Total amount of polymerizable compd in Ink (g) |
|---|---|---|---|---|---|---|---|---|---|---|---|---|---|---|
| | | Pig. Dispersant | Total amt. (g) | Pig. amt. (g) | Disp. amt. (g) | PEA amt. (g) | BMI (1-1-12) (g) | PMI (A-13) (g) | NVC (g) | PEA (g) | Irg819 (g) | ST-1 (g) | MEHQ (g) | |
| Ex. 1 | Ink 1 | (b-1)PlymP-1 | 15.0 | 3.0 | 1.2 | 10.8 | 10.0 | - | 30.0 | 36.0 | 8.0 | 0.5 | 0.5 | 77.3 |
| Ex. 2 | Ink 2 | (b-1)PlymP-2 | 15.0 | 3.0 | 1.2 | 10.8 | 10.0 | - | 30.0 | 36.0 | 8.0 | 0.5 | 0.5 | 77.3 |
| Ex. 3 | Ink 3 | (b-1)PlymP-2 | 15.0 | 3.0 | 1.2 | 10.8 | 15.0 | - | 30.0 | 31.0 | 8.0 | 0.5 | 0.5 | 72.3 |
| Ex. 4 | Ink 4 | (b-1)PlymP-2 | 15.0 | 3.0 | 1.2 | 10.8 | 20.0 | - | 30.0 | 26.0 | 8.0 | 0.5 | 0.5 | 67.3 |
| Ex. 5 | Ink 5 | (b-1)PlymP-3 | 15.0 | 3.0 | 1.2 | 10.8 | 10.0 | - | 30.0 | 36.0 | 8.0 | 0.5 | 0.5 | 77.3 |
| Ex. 6 | Ink 6 | (b-1)PlymP-4 | 15.0 | 3.0 | 1.2 | 10.8 | 10.0 | - | 30.0 | 36.0 | 8.0 | 0.5 | 0.5 | 77.3 |
| Ex. 7 | Ink 7 | (b-1)PlymP-5 | 15.0 | 3.0 | 1.2 | 10.8 | 10.0 | - | 30.0 | 36.0 | 8.0 | 0.5 | 0.5 | 77.3 |
| Ex. 8 | Ink 8 | (b-1)PlymP-2 | 15.0 | 3.0 | 1.2 | 10.8 | - | 3.0 | 37.0 | 36.0 | 8.0 | 0.5 | 0.5 | 84.3 |
| CEx. 1 | Ink 9 | C. Plym 1 | 15.0 | 3.0 | 1.2 | 10.8 | 10.0 | - | 30.0 | 36.0 | 8.0 | 0.5 | 0.5 | 77.3 |
| CEx. 2 | Ink 10 | (b-1)PlymP-1 | 15.0 | 3.0 | 1.2 | 10.8 | - | - | 30.0 | 46.0 | 8.0 | 0.5 | 0.5 | 87.3 |

In Table 2, the abbreviation of "Ex." denotes "Example number", the abbreviation of "CEx." denotes "Comparative Example number", the abbreviation of "Pig. Dispersant" denotes "Pigment Dispersant", the abbreviation of "Plym" denotes "Polymer", the abbreviation of "C. Plym " denotes "Comparative polymer", the abbreviation of "Total amt" denotes "Total amount of Mill base", the abbreviation of "Pig. amt." denotes " Amount of pigments in the mill base", the abbreviation of "Disp. amt." denotes "Amount of dispersant for pigments in the mill base", the abbreviation of "PEA amt." denotes "Amount of PEA (phenoxyethyl acrylate) in the mill base", the abbreviation of "BMI" denotes "Bismaleimide", and the abbreviation of "PMI" denotes "Polymaleimide".

### - Preparation of Yellow Inks 2 to 10 -

Preparation of inks 2 to 10 of Examples 2 to 8 and Comparative Examples 1 and 2 was conducted in substantially the same manner as that in the preparation of the ink 1, except that the kind and amount of the polymer (b-1), the compound (b-2), the polymerizable compound (c), the photopolymerization initiator, and the polymerization inhibitor were changed to those as shown in Table 2, respectively. Note that, in the table, NVC represents N-vinylcaprolactam (manufactured by Aldrich); PEA represents phenoxyethyl acrylate (trade name: AMP-10G; manufactured by Shin-Nakamura Chemical Co., Ltd.); Irg819 represents a photopolymerization initiator, bis(2,4,6-trimethylbenzoyl)phenyl phosphine oxide (trade name: IRGACURE 819, manufactured by Ciba Japan K.K.); ST-1 represents an 8.0% PEA solution of tris(N-nitroso-N-phenylhydroxylamine) aluminum salt (trade name: FIRSTCURE ST-1, manufactured by ALBEMARLE CORPORATION); and MEHQ represents 4-methoxyphenol (manufactured by Tokyo Chemical Industry Co., Ltd.).

### [Evaluation of Inks 1 to 10]

The obtained inks were evaluated as inkjet inks, according to the evaluation methods described below. The results are shown in Table 3. The evaluation of inks was conducted according to the criteria described below.

### <Evaluation of Yellow Ink>

### - Viscosity -

The viscosity of each ink at 40°C was measured by using an E-type viscometer (manufactured by TOKI SANGYO Co., Ltd.). All the inks had a viscosity within a range of 15 mPa·s or higher but lower than 25 mPa·s, the range being the viscosity region not problematic in terms of ejection.

### -Dispersion Stability -

Each ink was stored at 60°C for 1 week. The dispersed state after the storage was evaluated by measuring the viscosity.
A: The rate of increase in viscosity is 2% or higher but lower than 10%, that is not problematic in terms of dispersion stability.
B: The rate of increase in viscosity is 10% or higher but lower than 20%, which shows that the dispersion stability has lowered.
C: The rate of increase in viscosity is 20% or higher, which shows that the dispersion stability has remarkably lowered.
* The grade C is deemed as practically problematic.

### - Ejection Stability -

The printed matters obtained by printing an A4-sized solid image on 10 sheets using a piezo type inkjet head (trade name: CA3 HEAD, manufactured by Toshiba Tec Corporation; printing density of 300 dpi, jetting frequency of 4 kHz, and number of nozzles of 64) were observed. The presence or absence of streaked unevenness caused by non-ejection from the inkjet nozzle was observed and evaluated according to the following criteria. Note that, curing was conducted by using a deep UV lamp (trade name: SP-7, manufactured by USHIO INC.) at an energy of 8,000 mJ/cm².
A: The state in which the nozzle non-ejection has not occurred, and a high quality image has been formed.
B: The state in which the non-ejection or jetting deviation has slightly occurred, and image defects are slightly observed.
C: The state in which the non-ejection or jetting deviation has often occurred, and remarkable image defects are observed.
* The grade C is deemed as practically problematic.

### - Curability -

A solid image was printed on a vinyl chloride film such that the solid image had a thickness of 30 µm, using each of the obtained inkjet inks with the piezo type inkjet head (trade name: CA3 HEAD, manufactured by Toshiba Tec Corporation; printing density of 300 dpi, jetting frequency of 4 kHz, and number of nozzles of 64). Thereafter, exposure was conducted using a deep UV lamp (trade name: SP-7, manufactured by USHIO INC.) under the condition that the energy became 1,000 mJ/cm². In this way, printed samples were obtained. The cured film was touched with fingers, and the exposure was repeated until tacky feeling disappeared.

Evaluation was performed as follows, in terms of the number of times needed for curing.
A: 4 times or less.
B: 5 times.
C: 6 times or more.
* The grade C is deemed as practically problematic.

### - Thin Film Curability -

A solid image was printed on a vinyl chloride film such that the solid image had a thickness of 10 µm, using each of the obtained inkjet inks with a piezo type inkjet head (trade name: CA3 HEAD). Thereafter, exposure was conducted using a deep UV lamp (trade name: SP-7, manufactured by USHIO INC.) under the condition that the energy became 1,000 mJ/cm². In this way, printed samples were obtained. The cured film was touched with fingers, and the exposure was repeated until tacky feeling disappeared.
Evaluation was performed as follows, in terms of the number of times needed for curing.
A: 2 times or less.
B: 3 times.
C: 4 times or more.
* The grade C is deemed as practically problematic.

**TABLE 3**

| | | Pigment dispersant | Evaluation of Ink Composition | | | |
|---|---|---|---|---|---|---|
| | | | Dispersion Stability | Ejection Stability | Curability | Thin Film Curability |
| Example 1 | Ink 1 | (b-1) polymer P-1 | B | B | A | A |
| Example 2 | Ink 2 | (b-1) polymer P-2 | A | A | A | A |
| Example 3 | Ink 3 | (b-1) polymer P-2 | A | A | A | A |
| Example 4 | Ink 4 | (b-1) polymer P-2 | A | B | A | B |
| Example 5 | Ink 5 | (b-1) polymer P-3 | A | A | A | A |
| Example 6 | Ink 6 | (b-1) polymer P-4 | B | B | A | B |
| Example 7 | Ink 7 | (b-1) polymer P-5 | A | A | A | A |
| Example 8 | Ink 8 | (b-1) polymer P-2 | A | A | A | B |
| Comparative Example 1 | Ink 9 | Comparative polymer 1 | C | C | B | C |
| Comparative Example 2 | Ink 10 | (b-1) polymer P-1 | B | B | B | C |

From the results shown in Table 3, it was revealed that, in a case in which the polymer (b-1) was not used as in the case of Comparative Example 1, the dispersion stability was deteriorated and this was found to cause a problem in the ejection of the inkjet ink. In addition, the result of the evaluation on curability with respect to the thin film was inferior. Further, in a case in which the compound (b-2) was not used as in the case of Comparative Example 2, the curability with respect to the thin film was deteriorated, that was practically problematic. On the other hand, the ink compositions (inks 1 to 8) of the present invention containing both the polymer (b-1) and the compound (b-2) exhibit satisfactory dispersion stability and ejection stability, and also the curability with respect to the thin film was not practically problematic.

### [Example 9]

### - Preparation of White Ink 11 -

In a 200 mL beaker, 8.0 g of the polymer (b-1), P-6, was dissolved in 52.0 g of a polymerizable compound (c) (phenoxyethyl acrylate (PEA)). Further, a pigment (a) (a white pigment, titanium dioxide; trade name: CR-60-2, manufactured by ISHIHARA SANGYO KAISHA, LTD.) in an amount of 40 g was added thereto and mixed for 1 hour using a magnetic stirrer to perform preliminary dispersion. The obtained dispersion liquid was dispersed for 2.0 hours using a bead mill (trade name: MOTOR MILL M50, manufactured by Eiger; beads: zirconia beads, diameter of 0.65 mm) at a peripheral speed of 7.0 m/s to obtain a mill base. Then, to the obtained pigment dispersion (mill base), the compound (b-2), the polymerizable compound (c), photopolmerization initiator, polymerization inhibitor described in Table 4 were added and mixed by stirring, and then the mixture was subjected to pressure filtration using a membrane filter, thereby preparing ink 11 of Example 9.

**TABLE 4**

| | | Mill base | | | | | (b-2) Compound | Added polymerizable compound | | Photo-polymerization Initiator | Sensitizer | Polymerization Inhibitor | |
|---|---|---|---|---|---|---|---|---|---|---|---|---|---|
| | | Pig. Dispersant | Total amt. (g) | Pig. amt. (g) | Disp. amt. (g) | PEA amt. (g) | BMI (1-1-12) (g) | NVC (g) | PEA (g) | Irg819 (g) | ITX (g) | ST-1 (g) | MEHQ (g) |
| Ex. 9 | Ink 11 | (b-1)PlymP-6 | 40.0 | 8.0 | 3.2 | 20.8 | 30.0 | 36.0 | 30.0 | 8.0 | 8.0 | 0.5 | 0.5 |
| Ex. 10 | Ink 12 | (b-1)PlymP-7 | 40.0 | 8.0 | 3.2 | 20.8 | 30.0 | 36.0 | 30.0 | 8.0 | 8.0 | 0.5 | 0.5 |
| CEx.3 | Ink 13 | C. Plym 2 | 40.0 | 8.0 | 3.2 | 20.8 | 30.0 | 36.0 | 30.0 | 8.0 | 8.0 | 0.5 | 0.5 |

In Table 4, the abbreviation of "Ex." denotes "Example number", the abbreviation of "CEx." denotes "Comparative Example number", the abbreviation of "Pig. Dispersant" denotes "Pigment Dispersant", the abbreviation of "Plym" denotes "Polymer", the abbreviation of "C. Plym " denotes "Comparative polymer", the abbreviation of "Total amt" denotes "Total amount of Mill base", the abbreviation of "Pig. amt." denotes "Amount of pigments in the mill base", the abbreviation of "Disp. amt." denotes "Amount of dispersant for pigments in the mill base", the abbreviation of "PEA amt." denotes "Amount of PEA (phenoxyethyl acrylate) in the mill base", and the abbreviation of "BMI" denotes "Bismaleimide".

### - Preparation of White Inks 12 and 13 -

Preparation of inks 12 and 13 of Example 10 and Comparative Example 3 was conducted in substantially the same manner as that in the preparation of the ink 11, except that the polymer (b-1) was changed to the compound described in Table 4. Note that, in the table, ITX represents isopropylthioxanthone (trade name: DAROCURE ITX, manufactured by BASF); and DPGDA represents dipropylene glycol diacrylate (trade name: EBECRYL DPGDA, manufactured by DAICEL-CYTEC COMPANY LTD.).

### [Evaluation of Inks 11 to 13]

The obtained inks were evaluated as inkjet inks, according to substantially the same evaluation methods as the evaluation methods described above. The results are shown in Table 5. The evaluation of inks was conducted according to the criteria described below.

### <Evaluation of White Ink>

### - Viscosity -

The viscosity of each ink at 40°C was measured by using an E-type viscometer (manufactured by TOKI SANGYO Co., Ltd.). All the inks had a viscosity within a range of 15 mPa·s or higher but lower than 25 mPa·s, the range being the viscosity region not problematic in terms of ejection.

### -Dispersion Stability -

Each ink was stored at 60°C for 3 days. The dispersed state after the storage was evaluated by measuring the viscosity.
A: The rate of increase in viscosity is 2% or higher but lower than 10%, that is not problematic in terms of dispersion stability.
B: The rate of increase in viscosity is 10% or higher but lower than 20%, which shows that the dispersion stability has lowered.
C: The rate of increase in viscosity is 20% or higher, which shows that the dispersion stability has remarkably lowered.
* The grade C is deemed as practically problematic.

### - Ejection Stability -

The printed matters obtained by printing an A4-sized solid image on 5 sheets using the above piezo type inkjet head were observed. The presence or absence of streaked unevenness caused by non-ejection from the inkjet nozzle was observed and evaluated according to the following criteria. Note that, curing was conducted by using a deep UV lamp (trade name: SP-7, manufactured by USHIO INC.) at an energy of 8,000 mJ/cm².
A: The state in which the nozzle non-ejection has not occurred, and a high quality image has been formed.
B: The state in which the non-ejection or jetting deviation has slightly occurred, and image defects are slightly observed.
C: The state in which the non-ejection or jetting deviation has often occurred, and remarkable image defects are observed.
* The grade C is deemed as practically problematic.

### - Curability -

Printing was conducted, and exposure was repeated in substantially the same manner as that in the above evaluation on curability of the yellow inks.
Evaluation was performed as follows, in terms of the number of times needed for curing.
A: 5 times or less.
B: 6 times.
C: 7 times or more.
* The grade C is deemed as practically problematic.

### - Thin Film Curability -

Printing was conducted, and exposure was repeated in substantially the same manner as that in the above evaluation on the thin film curability of the yellow inks.
Evaluation was performed as follows, in terms of the number of times needed for curing.
A: 3 times or less.
B: 4 times.
C: 5 times or more.
* The grade C is deemed as practically problematic.

**TABLE 5**

| | | Pigment dispersant | Evaluation of Ink Composition | | | |
|---|---|---|---|---|---|---|
| | | | Dispersion Stability | Ejection Stability | Curability | Thin Film Curability |
| Example 9 | Ink 11 | (b-1) polymer P-6 | A | A | A | A |
| Example 10 | Ink 12 | (b-1) polymer P-7 | A | A | A | A |
| Comparative Example 3 | Ink 13 | Comparative polymer 2 | B | B | B | C |

From the results shown in Table 5, it was revealed that, in a case in which the polymer (b-1) was not used as in the case of Comparative Example 3, the ejection stability was deteriorated, and the result of the evaluation of curability with respect to the thin film was inferior, that was practically problematic. On the other hand, the ink compositions (inks 11 and 12) of the present invention containing both the polymer (b-1) and the compound (b-2) exhibit satisfactory dispersion stability and ejection stability, and also the curability with respect to the thin film was not practically problematic.

The foregoing description of the exemplary embodiments of the present invention has been provided for the purposes of illustration and description. It is not intended to be exhaustive or to limit the invention to the precise forms disclosed. The embodiments were chosen and described in order to best explain the principles of the invention and its practical applications, thereby enabling others skilled in the art to understand the invention for various embodiments and with the various modifications as are suited to the particular use contemplated.

## Claims

1. An ink composition comprising:
pigments (a);
at least two maleimide compounds (b); and
a polymerizable compound (c),
at least a first one of the at least two maleimide compounds (b) being a polymer compound (b-1) comprising at least one group selected from the group consisting of an amino group, a carboxyl group and a phosphoric acid group.

2. The ink composition according to claim 1, wherein a second maleimide compound of the at least two maleimide compounds (b), maleimide compound (b-2), is a compound that does not include any of an amino group, a carboxyl group or a hosphoric acid group.

3. The ink composition according to claim 1 or claim 2, wherein the polymer compound (b-1) comprising at least one group selected from the group consisting of an amino group, a carboxyl group and a phosphoric acid group comprises a repeating unit represented by following Formula (1), 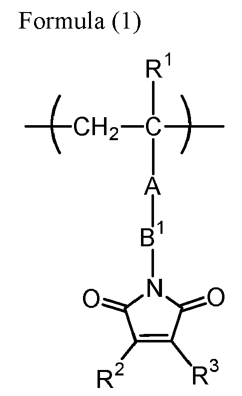 wherein, in Formula (1), R¹ represents a hydrogen atom or a methyl group; each of R² and R³ independently represents an alkyl group or an aryl group, and R² and R³ may bond to each other to form a ring; A represents a single bond, an arylene group, -COO-, or -CONR⁴-; R⁴ represents a hydrogen atom or an alkyl group; and B¹ represents a single bond, an alkylene group, an arylene group, or an aralkylene group, and the alkylene group, the arylene group or the aralkylene group may include one or more ether bonds (-O-) or one or more ester bonds (-COO- or -OCO-) in each group thereof.

4. The ink composition according to any one of claims 1 to 3, wherein the polymer compound (b-1) comprising at least one group selected from the group consisting of an amino group, a carboxyl group and a phosphoric acid group further comprises a repeating unit represented by following Formula (2), 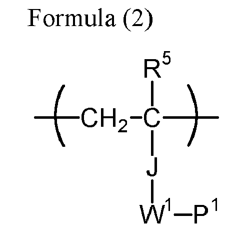 wherein, in Formula (2), R⁵ represents a hydrogen atom or a methyl group; J represents a single bond, -CO-, -COO-, -CONR⁶-, -OCO- or a phenylene group; R⁶ represents a hydrogen atom, an alkyl group, an aryl group or an aralkyl group; W¹ represents a single bond, an amido bond, an alkylene group or an aralkylene group, and the alkylene group or the aralkylene group may include an imino bond, an ester bond, an ether bond, a sulfonamido bond, a urethane bond, a ureylene bond, a carbonate bond or a heterocyclic group in each group thereof; and P¹ represents a condensed ring group in which 3 to 5 rings are condensed.

5. The ink composition according to claim 4, wherein P¹ in Formula (2) represents a condensed ring group derived from acridone, quinacridone, anthraquinone, naphthalimide, carbazole, acridine, dibenzofuran, 2,3-naphthalenedicarboximide, phenothazine or fluorenone.

6. The ink composition according to any one of claims 1 to 5, wherein the polymer compound (b-1) comprising at least one group selected from the group consisting of an amino group, a carboxyl group and a phosphoric acid group is a graft copolymer having another repeating unit derived from a polymerizable oligomer having an ethylenically unsaturated double bond at a terminal of the oligomer.

7. The ink composition according to any one of claims 1 to 6, wherein a weight average molecular weight (Mw) of the polymer compound (b-1) comprising at least one group selected from the group consisting of an amino group, a carboxyl group and a phosphoric acid group, which is measured by using gel permeation chromatography with respect to polystyrene standards, is in a range of from 10,000 to 500,000.

8. The ink composition according to any one of claims 2 to 7, wherein a molecular weight of the compound that does not include any of an amino group, a carboxyl group or a hosphoric acid group is a low molecular weight compound having a molecular weight in a range of from 300 to 2,000.

9. The ink composition according to any one of claims 2 to 8, wherein the compound that does not include any of an amino group, a carboxyl group or a hosphoric acid group comprises at least two maleimido groups.

10. The ink composition according to any one of claims 1 to 9, wherein the polymerizable compound (c) is a (meth)acrylate compound.

11. The ink composition according to any one of claims 1 to 10, further comprising a polymerization initiator.

12. The ink composition according to any one of claims 1 to 11, further comprising a polymerization inhibitor in a range of 1,000 ppm to 20,000 ppm with respect to a total mass of the ink composition.

13. A use of the ink composition according to any one of claims 1 to 12 for an inkj et recording.

14. An image forming method comprising forming an image with an inkjet printer using the ink composition according to any one of claims 1 to 12.

15. A printed matter formed by using the ink composition according to any one of claims 1 to 12.
